# EUROPEAN PATENT APPLICATION

(11) **EP 4 806 248 A1**
(43) Date of publication of application: **16.09.2026**
(21) Application number: 25163874.8
(22) Date of filing: 14.03.2025
(51) Int. Cl.: A01C 21/00, C05F 11/08

(54) **A MYCELIUM-BASED STRUCTURE FOR BIODIVERSITY ENHANCEMENT AND HABITAT FORMATION AND RESTORATION**

(71) Applicant: Vettó Kft., 1094 Budapest (HU)
(72) Inventor: Tóth, Alex Mihály, 5462 Cibakháza (HU)
(74) Representative: Poljak, Michal

(57) **Abstract**

The present invention relates to a mycelium-based structure for biodiversity enhancement and habitat formation and restoration, comprising: mycelium of at least one fungus; and a substrate of discrete particles bonded together by the mycelium, wherein the substrate comprises plant biomass. The structure comprises: a rounded belly portion (1); and a hook portion (2). The hook portion (2) comprises: a proximal straight section (3) attached to the rounded belly portion (1); a curved section (4) attached to the proximal straight section (3); and a distal straight section (5) attached to the curved section (4). The proximal and distal straight sections (3, 5) are oriented in parallel to each other and the curved section (4) is an arc. The present invention further relates to an assembly of a mycelium-based lock (6) or support (7) and the mycelium-based structure, and to a method for production of the mycelium-based structure.

## Description

### Field of technology

This invention relates to a mycelium-based structure for biodiversity enhancement and habitat formation and restoration, thus integrating renewable energy systems, such as solar parks, with innovative approaches to restore natural ecosystems. The invention uniquely bridges these areas by turning renewable energy infrastructure into active drivers of ecological regeneration and soil health improvement, aligning renewable energy production with environmental sustainability. This invention relates to a mycelium-based structure as a versatile ecological restoration tool for dispersing nutrients and soil amendments in degraded environments.

### Background of the invention

Wood-decay fungi are fungal species that digest moist wood, causing it to rot. Wood-decay fungi can be classified according to the type of decay that they cause as brown rot, soft rot and white rot fungi. Each type produces different enzymes, can degrade different plant materials and can colonise different environmental niches. Brown rot and soft rot fungi both digest cellulose and hemicellulose but not its lignin, whereas white rot fungi digest lignin as well. Within the context of this invention, white rot fungi are lignocellulose-degrading fungi.

*Pleurotus ostreatus,* a wood-decay fungus of white rot type and commonly known as oyster mushroom or oyster tree mushroom, has shown significant potential in being cultivated on an extensive variety of lignocellulosic waste materials generated from farming and forestry practices and it is one of the top three cultivated edible mushroom species in the world.

*Pleurotus pulmonarius,* a wood-decay fungus of white rot type and commonly known as oyster phoenix mushroom, and *Ganoderma lucidum,* a wood-decay fungus of white rot type and commonly known as reishi, varnished conk or ling chih, are similar to *P. ostreatus,* in terms of their preferences for digesting lignocellulosic waste materials.

Mycelium is a vegetative body and filamentous root-like structure of a fungus, such as *P. ostreatus* or *P. pulmonarius.* Fungal spawn is a medium present in fungal tissue that propagates the fungus. A substrate suitable for growing mycelium of *P. ostreatus* or *P. pulmonarius* is generally considered to have a high content of lignocellulosic material. Both *P. ostreatus* and *P*. *pulmonarius* are able to break down lignin, since they produce enzymes such as laccase, manganese oxidizing peroxidase, versatile peroxidase and aryl-alcohol oxidase. These enzymes allow *P. ostreatus* and *P. pulmonarius* to be easily grown on various lignocellulosic substrates, including paper materials, sawdust and agricultural waste.

The publication of Matthew William Reiss, II titled "Pleurotus ostreatus production on Cannabis sativa, L. (Industrial Hemp) Residues for Edible Mushrooms and Mycelium-based Composites" explores various combinations of substrates (hemp hurd, bast fibres, soybean hull, wheat straw and white oak sawdust) for cultivating mushroom fruiting bodies of *P. ostreatus. P. ostreatus* cultivated on hemp hurd emerges as a particularly advantageous combination due to a high fungal biomass growth rate and a short colonisation period of the mushroom. The publication also explored particular applications of such combinations in insulation bricks, acoustical panels and biodegradable planter pots.

There are mycelium-based birdhouses, insect hotels or other wildlife sheltering structures known in the prior art.

The mycelium structures linked at https://www.instructables.com/Ecovative-GIY-Birdhouse/ and https://amaseproject.eu/wp-content/uploads/2024/07/Amase_Mycelium_english.pdf (available on 14 March 2025) disclose an egg-shaped birdhouse and an insect hotel laid in a baking tray, using a mycelium-based material marketed under Grow it Yourself^{®} or Grow bio^{®}, see the following links: https://grow.bio/products/grow-it-yourself-material?srsitid=AfmBOorUm6I2JIkSjRZ0ePfOrDkLU93AgRO-r83MF1x-lRqlXkjJ0HdV; https://cdn.shopify.com/s/files/1/1507/3978/files/GIY_SDS_fc1c5571-b809-4446-95f9-5988d5512b73.pdf?v=1664373515; https://grow.bio/pages/spec-sheet and https://cdn.shopify.com/s/files/1/1507/3978/files/GIY-SpecSheet-2022-interactive_a32de1b2-5dd7-43a3-8366-dd9d38ffcdee.pdf?v=1705598786 (available on 14 March 2025). The material contains 6-15 wt. % proprietary component (implicitly the mycelium precursor), 40-45 wt. % corn stover, 40-45 wt. % hemp pith (or hemp hurd) and 1-5 wt. % wheat flour. The corn stover and the hemp pith seem to have a filler and a support function for the structure. The egg-shaped mycelium birdhouse is shown hanging on a string. Disadvantageously, these shapes are not suitable for easy hanging on horizontal bars, diagonal bars or vertical pillars of solar panels and are too bulky to be shipped efficiently. The use of hemp pith (hemp hurd, being a wooden refuse removed during processing hemp, as opposed to the fibres) would not provide enough reinforcement to a hook-like mycelium structure.

The mycelium structure linked at https://www.aalto.fi/en/contemporary-design/mycelium-birdhouse (available on 14 March 2025) is a cylindrically shaped birdhouse with a removable top cap. The cylindrically shaped birdhouse is shown attached to a tree trunk with a string guided via a through hole in the back of the structure. The contents of the mycelium substrate material are not provided.

The mycelium structure linked at https://www.mediamatic.net/en/page/384488/building-with-mycelium (available on 14 March 2025) is a box shaped birdhouse. The contents of the mycelium substrate material are not provided.

The mycelium structure linked at https://www.behance.net/gallery/109569939/MYCOmoss-BirdHouse (available on 14 March 2025) is an egg-shaped birdhouse. The material contains a mycelium precursor and straw as a filler. The egg-shaped birdhouse is shown attached to a tree trunk.

The mycelium structure linked at https://www.futurematerialsbank.com/material/mycelium-17/ (available on 14 March 2025) is an egg-shaped or an upside-down U-shaped bee hotel. The material contains a mycelium precursor and wood sawdust as a filler. The upside-down U-shaped bee house is shown attached to a tree trunk, suspended on a wooden block.

The mycelium structures linked at https://www.cccneb.edu/alumni-foundation/alumni/community-connection/fall-2020-community-connection/fungi-fascination/; https://thekidshouldseethis.com/post/katy-ayers-mushroom-canoes-bee-hotel-mycelium-video and https://thebluebirdgirl.wixsite.com/thebluebirdgirl/mycelium-grown-bee-hotels (available on 14 March 2025) are box-shaped or hexagonal-shaped bee hotels. The contents of the mycelium substrate material are not provided. The mycelium has been shown to interact with bee excretions to form a juice beneficial to bees when drunk by them.

The mycelium structure linked at https://www.kellyobrien.art/pollinator-sanctuary (available on 14 March 2025) is an egg-shaped or a box-shaped bee hotel. The contents of the mycelium substrate material are not provided.

The mycelium structure linked at https://www.euronews.com/green/2021/05/27/the-homegrown-hive-that-could-save-ireland-s-bees (available on 14 March 2025) is a cylindrically shaped beehive. The material contains a mycelium precursor and hay or wood chips as a filler. The beehive has angular wooden (bamboo) support rings and is suspended on a tree by means of an upwardly protruding steel pin with a hole, having a hook placed in it.

The mycelium structure linked at https://upload2.beebreeders.com/upload/06.12.2021/sm_huge/bcd6c8a19853eca609347bf7e9e 1c80e.jpg (available on 14 March 2025) is an egg-shaped birdhouse. The material contains a mycelium precursor and sawdust, wood chips or straw as a filler. The egg-shaped birdhouse has an inner and an outer shell, each shell having a bottom and a top portion separated by a spacer. The outer shell is supported on a mounting ring, which is shown suspended on a tree by means of strings.

The mycelium structure linked at https://upload2.beebreeders.com/upload/28.06.2020/sm_huge/c01e96b5ad13899b34af7cf1dcc 73ff5.jpg (available on 14 March 2025) is an irregular, roofed, box-shaped birdhouse. The material contains a mycelium precursor and non-specific agricultural waste as a filler. The box-shaped birdhouse is shown hanging from a tree.

The European patent EP 2094856 B1 discloses a generic self-supporting composite material (such as in the form of a panel or packaging) comprising a substrate of discrete particles and having a network of interconnected mycelia cells extending through and around said discrete particles and bonding said discrete particles together. It further discloses a method of making such a composite material by:
a. forming an inoculum including a preselected fungus;
b. forming a mixture of a substrate of discrete particles and a nutrient material, said nutrient material being capable of being digested by said fungi;
c. adding said inoculum to said mixture; and
d. allowing said fungus to digest said nutrient material in said mixture over a period sufficient to grow hyphae and to allow said hyphae to form a network of interconnected mycelia cells through and around said discrete particles thereby bonding said discrete particles together to form a self-supporting composite material.

The US patent US 11277979 B2 discloses a generic method of growing a mycological biopolymer material by:
a. placing nutritive substrate and a fungus in a cavity of a tool and covering it with a lid having an outlet open to fresh air; and
b. allowing the fungus to grow in the cavity by consuming the nutritive substrate, thereby producing CO₂ which gradually diffuses by the outlet.

The European patent applications EP 4056674 A1 and EP 4305150 A1 disclose a one-step and a two-step colonization method of manufacturing a mycelium-based construction and/or insulation material by:
a. providing a fungus and a substrate;
b. introducing or preparing a mixture of the fungus and the substrate in a mould;
c. allowing the fungus to grow to form a network of hyphae through the mixture to form a mycelium composite;
d. taking the composite from the mould;
e. shredding the composite to chunks; and
f. optionally, introducing the chunks into an enclosure and allowing the fungus to grow to form a network of hyphae around and/or through the chunks to form a further composite.

They further disclose a construction and/or insulation material (such as a plate, a panel, a load-bearing element for frame construction, or an insulation layer or wall), comprising the chunks of the mycelium composite.

A similar two-step colonization method of manufacturing a mycelium-based product is disclosed by the Chinese patent application CN 111990171 A.

The disadvantages of the above European and Chinese patent documents include an unsuitable shape of the composite products for biodiversity enhancement and habitat formation and restoration.

The international patent application WO 2010005476 A1 discloses in Figs. 23-25 a block of mycelium tissue being fully moistened with water by soaking and then bent around a rod to form an internal radius in the block. Disadvantageously, the radius is formed in a finished and dried product as an extra step.

The below mentioned patent documents all disclose glass bottles filled with mycelium for breeding larvae of insects. The mycelium substrate is intended to be consumed by the larvae and has a generally cylindrical shape derived from the shape of the glass bottle.

The Japanese patent JP 3682240 B2 combines the mycelium substrate with wood chips as a filler. The bottle is divided into segments with partitions, which can be made of hemp fibres. The hemp fibres do not function as a support within the mycelium substrate. The Japanese patent application JP 2003000099 A and the Japanese patent JP 3394974 B2 combine the mycelium substrate with wood chips as a filler. The Japanese patent applications JP 2014236708 A and JP 2006075143 A show an assemblable bottle filled with a mycelium substrate. When disassembled, the mycelium substrate has a cylindrical shape.

Disadvantages of all the above-mentioned mycelium-based birdhouses or insect hotels include shapes unsuitable for easy and quick hanging on horizontal bars of solar panels (or tree branches, fences, balcony rails etc.) and inefficient shipping due to their bulkiness.

Further disadvantages of all the above-mentioned mycelium-based structures is their difficult deployability in degraded environments.

There is therefore a need in the prior art and the object of the present invention is to provide a mycelium-based structure suitable for habitat restoration with a shape allowing easy installation by hanging on a horizontal bar as well as allowing easy stacking for efficient shipping.

Further, there is a need in the prior art and the object of the present invention is to provide a mycelium-based structure suitable for habitat restoration with a shape allowing easy deployability in degraded environments.

### Summary of the invention

In the first aspect of the invention, the object of the present invention is achieved by a mycelium-based structure according to claim 1. The preferred embodiments of the mycelium-based structure are disclosed in claims 2 to 10.

### Mycelium-based structure

The mycelium-based structure comprises: mycelium of at least one fungus; and a substrate of discrete particles bonded together by the mycelium. The substrate comprises plant biomass. Such a composition of fully renewable biomaterials forms a lightweight yet durable structure. Within the context of this invention, mycelium means a network of interconnected mycelia cells, extending through and around the discrete particles of the substrate.

Optionally, the fungus is any of *Pleurotus ostreatus*, *Pleurotus pulmonarius*, *Pleurotus populinus*, *Pleurotus eryngii, Ganoderma lucidum, Trametes versicolor, Phanerochaete chrysosporium, Lentinula edodes*, *Hypsizygus ulmarius* or a combination thereof. Optionally, the fungus is a wood-decay fungus. A combination means a simple mixture or a genetic hybrid of at least two fungi.

The natural decomposition properties of the mycelium enrich soil with organic nutrients, aiding local flora and avoiding waste accumulation. The structure is free from any applied coatings, paints, or synthetic sealants, ensuring that no microplastics or harmful chemicals are released into the environment during its lifecycle or decomposition.

As the structure gradually breaks down, it enhances soil microbial activity by fostering beneficial fungi and bacteria that contribute to nutrient cycling and organic matter decomposition. The porous nature of the material aids in soil aeration, improving root penetration and oxygen exchange. Additionally, the structure retains moisture, helping prevent soil desiccation and creating a more favourable microclimate for plant growth.

The average decomposition period is approximately 20-24 months to full decomposition under continental European climate and temperature conditions, during which time it enriches the soil with organic matter, enhancing fertility, improving soil structure, and supporting native vegetation growth. Partial decomposition can be seen as soon as after 8-12 months. The breakdown process also contributes to carbon sequestration, temporarily storing atmospheric carbon within the soil ecosystem.

Gradual decomposition keeps the integrity of the structure for one to two full seasons before fully integrating into the soil, leaving no residual waste while actively improving soil health and biodiversity.

Moreover, mycelium is a fire-retardant material (up to 1400 °C), which reduces risk in proximity to solar panels. Moderate waterproofing properties of mycelium ensure functionality through varying weather conditions (rain, humidity) while retaining biodegradability.

Natural pigments or bio-based dyes can be introduced into the soaking water during the hydration process to infuse the final structure with colour without affecting fungal colonization. Similarly, the structures can be painted with the pigments or dyes after colonization or even after drying. This allows for biodegradable, non-toxic coloration tailored for specific ecological or aesthetic applications. This also allows the structure to adopt earth-tone hues or specific colours that blend with natural habitats or serve functional marking purposes (e. g. differentiating habitat types or indicating degradation stages).

The underlying idea of the mycelium-based structure according to the present invention is the shape of the structure, comprising: a rounded belly portion; and a hook portion. The hook portion comprises: a proximal straight section attached to the rounded belly portion; a curved section attached to the proximal straight section; and a distal straight section attached to the curved section. The proximal and distal straight sections are oriented in parallel to each other and the curved section is an arc. The arc can be a circular arc, an elliptical arc or any other kind of a curve. The hook portion ensures an easy, one-hand, one-movement installation of the structure by hanging, such as on a horizontal bar, a diagonal bar, a vertical pillar, a tree branch etc. The hook portion further ensures that the centre of gravity of the whole structure is located centrally within the rounded belly portion so that it the rounded belly portion does not tilt when hung.

Such a structure minimizes wind drag when mounted on solar structures and ensures stability without external fasteners while allowing easy seasonal replacement. Natural curved pressure points can lock onto pillars or fences, preventing movement.

The underlying idea of the mycelium-based structure according to the present invention is that the hook portion of a first such structure further creates an open space between the proximal and distal straight sections and the curved section such that a rounded belly portion of a second such structure can fit therebetween, wherein the hook portion of the second structure creates an identical open space between the proximal and distal straight sections and the curved section such that the rounded belly portion of the first structure can fit therebetween. Such a shape fit allows for compact and efficient shipping of two structures at once.

Within the context of this invention, *Pleurotus ostreatus* is known as oyster mushroom, oyster fungus, hiratake or pearl oyster mushroom, *Pleurotus pulmonarius* is known as Indian oyster, Italian oyster, phoenix mushroom or lung oyster, *Pleurotus populinus* is known as aspen oyster mushroom, *Pleurotus eryngii* is known as king trumpet mushroom, French horn mushroom, eryngi, king oyster mushroom, king brown mushroom, boletus of the steppes, trumpet royale or ali'i oyster, *Ganoderma lucidum* is known as reishi, varnished conk or ling chih, *Trametes versicolor* is known as turkey trail, *Phanerochaete chrysosporium* is known as a model white rot fungus, *Lentinula edodes* is known as shiitake or Chinese/black mushroom and *Hypsizygus ulmarius* is known as elm oyster mushroom.

Within the context of this invention:
- *Pleurotus ostreatus* is suitable due to its slow colonization rate, good mechanical properties, and compatibility with agricultural residues and wood chips;
- *Pleurotus pulmonarius* is suitable due to its fast colonization rate, strong substrate binding, structural durability, and compatibility with lignocellulose-rich materials;
- *Pleurotus populinus* is suitable due to its fast colonization rate, strong substrate binding, structural durability, and compatibility with lignocellulose-rich materials;
- *Pleurotus eryngii* is suitable due to its fast colonization rate, strong substrate binding, structural durability, and compatibility with lignocellulose-rich materials;
- *Ganoderma lucidum* is suitable due to its slow colonization rate, high mechanical strength, strong, dense mycelial network, high durability, and compatibility with lignocellulosic residues (such as sawdust, agricultural waste);
- *Trametes versicolor* is suitable due to its medium colonization rate, effective lignin degradation, contributing to composite durability, high resistance to environmental fluctuations, enhancing longevity in outdoor conditions, and compatibility with various lignocellulosic substrates;
- *Phanerochaete chrysosporium* is suitable due to its fast colonization rate, efficient lignin degradation, promoting biodegradability and faster structural decomposition in soil improvement applications, and compatibility with wood-based substrates;
- *Lentinula edodes* is suitable due to its slow colonization rate, strong, fibrous mycelial growth enhancing tensile strength and improving mechanical resilience, and compatibility with hardwood sawdust and straw; and
- *Hypsizygus ulmarius* is suitable due to its medium to fast colonization rate, aggressive cellulose breakdown, contributing to structural integrity, and compatibility with agricultural waste, sawdust.

The above-listed fungal species are all suitable based on their enzymatic capabilities, colonization behaviour and substrate compatibility.

Optionally, the mycelium-based structure comprises mycelium of *Pleurotus ostreatus* and *Pleurotus pulmonarius.* As it will be explained in more detail below, *P. pulmonarius* is a fast-colonizing, cellulose-degrading strain, which spreads rapidly within the first five to seven days, outcompetes any contaminants while efficiently degrading cellulose and hemicellulose, and softens the substrate. On the other hand, *P. ostreatus* is a slow-colonizing, lignin-degrading strain, which develops a denser mycelial network, binds the substrate more effectively, specializes in lignin degradation, reinforces structural integrity and improves durability. The integration of these fungal strains results in a durable, well-balanced mycelial network that provides structural cohesion and biodegradability.

Optionally, the mycelium-based structure comprises mycelium of *Ganoderma lucidum* and *Pleurotus pulmonarius.* As it will be explained in more detail below, *P. pulmonarius* is a fast-colonizing, cellulose-degrading strain, which spreads rapidly within the first five to seven days, outcompetes any contaminants while efficiently degrading cellulose and hemicellulose, and softens the substrate. On the other hand, *G. lucidum* is a slow-colonizing, lignin-degrading strain, which develops a denser mycelial network, binds the substrate more effectively, specializes in lignin degradation, reinforces structural integrity and improves durability. The integration of these fungal strains results in a durable, well-balanced mycelial network that provides structural cohesion and biodegradability.

Optionally, the substrate is selected from a group consisting of hemp, hemp hurd, straw, hay, wood sawdust, wood chips, bagasse, corn husks, corn cobs, coconut coir, spent coffee grounds or a combination thereof.

Optionally, the substrate is hemp hurd. The substrate generally serves as the foundation for fungal colonization and structural integrity. Hemp hurd appears a suitable choice for its high lignocellulosic content (cellulose, hemicellulose, and lignin), structural durability and even moisture retention and oxygen porosity properties, ensuring rapid growth while maintaining a stable, mouldable structure and preventing anaerobic conditions that could hinder mycelial development.

Other suitable alternatives to hemp hurd appear to be:
- bagasse, providing a balance of cellulose and hemicellulose, which supports fungal growth while maintaining a stable, fibrous structure;
- corn husks and/or corn cobs, providing a fibrous, porous structure suitable for fungal colonization and enhancing airflow and moisture retention, thus creating an optimal environment for mycelium colonization;
- coconut coir, retaining moisture well and providing a fine, flexible matrix that supports dense mycelial networks while resisting compaction;
- straw and/or hay, which have long, interwoven fibres, allowing for good structural integrity and enhanced aeration, promoting even colonization;
- wood sawdust and/or wood chips, offering lignocellulosic richness, which mycelium effectively breaks down while forming a strong, durable matrix for structural applications; and
- spent coffee grounds, providing high lignocellulosic content, structural porosity, moisture retention and biodegradability in addition to being suitable for a 3D printing method.

All above-listed materials share key properties that make them suitable for mycelium-based structures: high lignocellulosic content for fungal nutrition, structural porosity for airflow, moisture retention for sustained colonization, and biodegradability ensuring environmental compatibility.

Optionally, the proximal straight section has a tapered shape narrowing towards the curved section and widening towards the rounded belly portion. The tapered shape reinforces the attachment of the curved section to the rounded belly portion, improving structural integrity and load distribution. By widening towards the rounded belly portion, it reduces stress concentration, preventing breakage under wind loads or animal movement. **It** also promotes even drying, minimizing warping or cracks in the structure. If the proximal straight section had an even thickness, manufacturing might be simpler, but the risk of shear failure and reduced durability would increase. A uniform section may require additional reinforcement, affecting biodegradability.

Optionally, the distal straight section has a tapered shape widening towards the curved section and narrowing towards a distal end of the distal straight section. The tapered shape allows the curved section to hook through industrial fences with ease.

Optionally, the mycelium-based structure comprises hemp fibres arranged in the hook portion and oriented at least partially along the hook portion. Advantageously, the hemp fibres are arranged in the hook portion as well as the rounded belly portion and are oriented at least partially along the outer edges of the hook portion and the rounded belly portion. The hemp fibres can be up to 30 cm long, have excellent tensile strength and can resist stretching forces well. The hemp fibres thus act as an internal support network, improving tensile strength, structural resilience of the structure and pressure resistance through a more even pressure distribution (e. g. outward or upward pressure due to wind or animal acting upon the structure). The natural integration of the fibres into the mycelial matrix ensures a uniform, reinforced form without disrupting the biodegradability of the material. In other words, by incorporating the hemp fibres within the hook portion, the structure gains increased load-bearing capacity, making it more resistant to stress while maintaining its lightweight and biodegradable nature. What is more, the hook portion will remain rigid enough to hold its shape but flexible enough to adapt to minor variations in the shape of a pillar or fence. Furthermore, the hemp fibres delay structural collapse of the structure, allowing the habitat to remain functional longer and providing support for the structure until its final degradation phase.

Optionally, the mycelium-based structure comprises at least one first through-hole and/or cavity in the rounded belly portion. The cavity can mimic a natural cavity found in tree hollows or rock crevices, protecting small nesting birds (e. g., sparrows, tits, swallows) from wind and rain and benefitting insects (e. g., pollinators, solitary bees) from varied hole sizes, providing overwintering habitats and spaces for egg-laying, sheltering, or material storage . Hole or cavity entry shapes can be e. g. circular, oval, square or rectangular. Hole or cavity entries can be positioned in the rounded belly portion or in the proximal straight section.

Additionally, for terrestrial and suspended applications, at least one ventilation and redundant water drainage hole is recommended in the bottom section of the rounded belly portion. This feature allows for air circulation, preventing excess humidity build-up, and ensures water drainage in case of rain infiltration, improving long-term durability. When placed on the ground, this drainage hole should be positioned in the lowest point of contact to prevent water accumulation inside the structure, reducing the risk of material degradation and creating a more stable microclimate for sheltering species.

Optionally, the rounded belly portion has tapered bottom edges for arranging on or in the ground in a stable manner. The tapered bottom edges allow partial soil embedding, mimicking burrows used by lizards, snakes, frogs and small rodents. Moisture retention inside the structure makes it suitable for amphibians, preventing dehydration in dry seasons. The decomposition process releases nutrients, improving soil microbiota.

Optionally, the distal straight section comprises a vertical cut-in gap (e. g. 5-10 cm long) for locking the structure onto a vertical bar. The vertical cut-in gap is either moulded during production and naturally colonized by mycelium around a temporary insert (plastic or metal, such as 4 mm wide) into a structured recess, or cut out in the finished structure. This allows secure hanging with a simple self-locking mechanism onto industrial thin-bar fences without extra supports. This is advantageous for creating linear biodiversity corridors along solar parks. Advantageously (see also below), the temporary insert is inserted in the colonized mixture before the second colonization step. Removing the temporary insert (before drying) leaves a clean, well-defined vertical cut-in gap that integrates seamlessly into the structure with a protective mycelium layer around the edges. The cut-out alternative step is less preferred, as it lacks the mycelium's natural reinforcement and may lead to weaker structural edges.

Optionally, the mycelium-based structure comprises a porous carrier selected from biochar, activated carbon, lignite-derived humic acid or a derivative thereof, zeolite, diatomaceous earth or a clay mineral (e. g. bentonite or montmorillonite), providing a suitable carrier for nutrient impregnation. Optionally, the porous carrier is impregnated with nutrients, such as nitrogen, phosphorous, potassium and/or trace elements (e. g. magnesium, calcium, sulphur, zinc, manganese, iron, copper, boron, molybdenum) for facilitating controlled and prolonged nutrient release into the soil as the mycelium structure biodegrades over time. The porous carrier, due to its high porosity, provides a stable, environmentally friendly and efficient nutrient reservoir. Nutrient impregnation enhances overall ecological restoration effectiveness. Optionally, the porous carrier is used in combination with any of the substrates listed herein and arranged within the structure (embedded in its core) and not contacting the surface of the structure due to its sensitivity to humidity. In other words, the porous carrier is preferably covered completely with the mycelium.

Optionally, the mycelium-based structure comprises plant seeds embedded in the structure. The structure integrates a built-in seed dispersal feature, ensuring that the seeds are shielded by the mycelium-substrate composite from early consumption by birds or rodents, while allowing for delayed, natural release during the final degradation phase. The seeds are also insulated from moisture, extreme heat or early sprouting. The seeds can be native wildflower seeds, ensuring compatibility with local ecosystems and pollinator species. The plants emerging from these seeds can provide nectar and pollen for pollinator species, prevent soil erosion as native grasses and flowering perennials, and improve nitrogen fixation in the soil as leguminous nitrogen-fixing plants. The methods of seed embedding are discussed further below.

Optionally, the mycelium-based structure comprises up to 5 wt. % of a hydrocolloid binder (such as xanthan gum agar, guar gum or carrageenan) for enhancing adhesion and improving consistency. The hydrocolloid binder can also support automation requiring pre-formed structures that are then further colonized together by providing sufficient structural integrity to prevent collapse in cavity-based moulding techniques.

Optionally, the mycelium-based structure comprises an outer protective coating made from cutin and/or beeswax to enhance waterproofing properties of the structure. This approach provides effective water insulation while maintaining the structure's eco-friendly, microplastics-free and biodegradable nature.

The thickness of the coating can range from 0.2 mm to 2 mm, depending on the application. Minimal waterproofing (app. 0.2-0.5 mm) can be used for terrestrial applications (e. g. solar parks, fences, balconies). Moderate waterproofing (app. 0.5-1 mm) can be used for high-humidity environments (e.g. wetlands, urban green roofs). Enhanced waterproofing (app. 1-2 mm) can be used for floating, completely or partially submerged applications (e.g. aquatic restoration, reef islands). Minimal and moderate waterproofing allows natural degradation while providing moisture resistance. Enhanced waterproofing ensures structural longevity in water-based environments, preventing premature collapse. Methods of introducing such a coating are described below.

In particular the enhanced waterproofing should include an even coating layer to prevent moisture absorption accelerating the breakdown of the structure. Several layers (even embedded in the structure) can be used for enhanced waterproofing, each with a different rate of decomposition in aquatic environments (e. g. a top layer decomposing faster than a bottom layer), securing marine colonisation before natural degradation.

Because a waterproof coating can alter the humidity microenvironment inside, risking altering species preferences, perforations or ventilation holes can be introduced in the coating to allow moisture control while maintaining insulation. For floating and underwater applications, the perforations can control water entry into the structure, preventing artificial buoyancy shifts.

Optionally, the mycelium-based structure comprises any of the following wireless electronics for collecting data on habitat restoration: a camera (e. g. a low-power wildlife camera), a microphone, an acoustic sensor, a motion sensor, a temperature sensor, a humidity sensor and/or a light intensity sensor. As an example, solar energy production forecasting can be complemented by collecting data based on bird and insect behaviour under varying weather conditions using integrated cameras and/or sensors built into the structure. This provides dual benefits: ecological monitoring to enhance biodiversity insights and operational data to optimize renewable energy production forecasting based on fauna responses to weather variations - potential to feed in a new type of parameter in the forecasting model.

The electronics can be inserted into pre-formed cavities or hollow sections of the structure after the material is fully produced. It can be secured with biodegradable plugs or adhesives to ensure it remains in place during deployment. This simplifies manufacturing by keeping the electronics and structural material separate, prevents exposure of the electronics to moisture and heat during mycelium growth or drying, and makes the electronics easily replaceable if they fail or need upgrading. Data can be transferred wirelessly via LoRa (Long Range), BLE (Bluetooth low energy), 4G or 5G technologies, or they can be stored in memory to be manually retrieved by an operator. The powering of the electronics can be done with rechargeable batteries, energy harvesting from the environment (such as a small wind turbine or a solar panel), or with even the adjacent solar panels, if placed in solar parks.

Optionally, the mycelium-based structure comprises structural features for adjusting its buoyancy in freshwater and/or seawater. These can include mixing lightweight organic aggregates (e. g. expanded cork and/or perlite) into the mycelium matrix to increase buoyancy; incorporating denser biodegradable or natural elements (e. g. stones, sand, clay or natural resins) to fine-tune sinking rates, wherein these can be in the form of naturally accumulating sediment traps and/or gradually dispersing weighted inserts; adding air pockets or hollow chambers to prolong flotation before gradual water absorption; and/or using layered density variations (lighter outer layers, denser core) to manage water absorption. Freshwater is characterised by slower water absorption, meaning floating phases last longer, compared to seawater characterised by higher salinity and density providing greater initial buoyancy, but biofouling accelerates water absorption, leading to earlier submersion. Transitions from floating to semi-submerged and then fully submerged can also be considered, mimicking natural wood decomposition in water bodies.

Optionally, the mycelium-based structure comprises structural features for securing stability in water. These can include weighted bases (using sand, gravel or clay) to prevent tipping in moving water; rounded or tapered edges reduce water resistance and prevent overturning; attachment points for natural ballast (such as stones, sediment pockets) or tethering to underwater structures; and/or a plurality of through-holes in flowing water to reduce drag forces and enhance stability.

Optionally, the mycelium-based structure comprises surface texture features for supporting biofouling. These can include porous, rough surfaces mimicking natural driftwood or rock crevices, encouraging attachment of algae, mussels, barnacles and microbial communities; micro-cavities and/or grooves providing safe niches for early-stage colonization of biofilm and filter-feeding organisms; irregular textures encouraging settlement of marine invertebrates (e. g. sponges, corals and molluscs) while reducing wash-off from currents; and/or synthetic or semi-natural surface analogues inspired by coral reef textures, mangrove root structures and sunken logs.

Optionally, the mycelium-based structure comprises structural features for resisting wave motion in seawater. These can include weighted base or anchoring features preventing excessive movement in high-energy coastal areas; wave-dispersing curved shapes reducing drag forces and stabilizing structures in dynamic waters; modular interlocking sections allowing flexible positioning in artificial reef setups; and/or flexible attachment points tethered to floating solar platforms, docks or offshore wind turbines without drifting.

Optionally, the mycelium-based structure comprises natural adhesion mechanisms or lightweight clamps for being mounted on walls and/or roofs (such as building façades, balconies, green walls). This encourages urban biodiversity by providing nesting spaces for birds, pollinators and bats in human-dominated environments.

Optionally, the mycelium-based structure comprises aerodynamic load-bearing features, including curved profiles reducing wind resistance, ensuring stability on rooftops, light poles or bridges; and/or lightweight, yet high-tensile strength materials (e. g. mycelium reinforced with hemp fibres) preventing stress fractures.

Optionally, the mycelium-based structure comprises cold-resistant mycelium species *P. ostreatus* and/or *T. versicolor,* which have high freeze tolerance, ensuring stability in cold climates.

Optionally, the mycelium-based structure comprises structural features for moisture absorption control, including denser mycelium growth with a fibrous substrate (e. g. hemp, coconut coir), enhancing water absorption control; water-retentive moss additives maintaining optimal humidity for nesting species; and/or variable pore/through-hole/cavity sizes allowing for air circulation while maintaining humidity. In addition, layered mycelium walls can regulate temperature and moisture, preventing overheating or excessive drying; and ventilation gaps can control internal humidity, optimizing nesting conditions for birds, insects and small mammals.

Optionally, the mycelium-based structure comprises textured surface features in the form of rough, fibre-like outer textures mimicking tree bark or rocky cavities, attracting nesting species.

### Assemblies comprising the mycelium-based structure

In the second aspect of the invention, the object of the present invention is achieved by an assembly, according to claim 11. The assembly comprises a mycelium-based lock and the above-mentioned mycelium-based structure. The mycelium-based lock comprises a base and at least two wedge-like protrusions, which are spaced apart and oriented in parallel to one another to define at least one gap between the protrusions (e. g. a shape of a sign [, a letter E, a letter E with an additional middle horizontal line). Optionally, the mycelium-based lock comprises a base and at least three (such as three) wedge-like protrusions, which are spaced apart to define two side and at least one (such as one) middle protrusion and which are oriented in parallel to one another to define a gap between each two neighbouring protrusions (e. g. a shape of a letter E). The width of the two gaps and the middle protrusion surrounded by said two gaps is equal to or larger than the width of the curved section of the mycelium-based structure. The curved section of the mycelium-based structure comprises a second through-hole for fitting the protrusion (such as the middle protrusion) therein. Such an assembly prevents backward movement due to wind with no need for additional fasteners.

Additionally, the E-shaped, mycelium-based lock can also be applied sideways by rotating it 90 degrees and pushing it onto the curved section, where it locks into place using one of the two gaps. This alternative locking method allows for flexible mounting options, securing the structure when a top-bottom installation is not feasible and adapting to various environmental and structural conditions.

In the third aspect of the invention, the object of the present invention is achieved by an assembly, according to claim 12. The assembly comprises a mycelium-based support and the above-mentioned mycelium-based structure. The mycelium-based support has a wedge shape with a wedge base and a wedge tip. The mycelium-based support is to be placed (with the wedge tip pointing downwards and the wedge base pointing upwards) between the rounded belly portion of the mycelium-based structure and a vertical fence or wall (such as a balcony railing, bench backside or generic panel-like structures). Such an assembly prevents side movements due to wind with no need for additional fasteners, which enhances stability when mounted on fences.

As for packaging, two layers of structures above one another, each comprising two interlocked structures, will provide four empty corners to make a box-like object suitable for easy packaging and shipping. These four empty corners can be filled with a total of four wedge-shaped, mycelium-based locks and/or supports, which makes the shipping of the whole assembly easier.

In the fourth aspect of the invention, the object of the present invention is achieved by a method for production of the above-mentioned mycelium-based structure, according to claim 13. The preferred embodiments of the method are disclosed in claims 14 and 15.

### One-step colonization method

The method comprises the following steps:
a. soaking the substrate in water to 60 to 75 % moisture content;
b. mixing 85 to 98 wt. % of substrate with 1 to 15 wt. % of fungal spawn of at least one fungus and with 1 to 3 wt. % of a nutrient material digestible by the at least one fungus;
c. placing the mixture in a moulding form and allowing the mycelium to colonise the substrate from the mycelium precursor by digesting the nutrient material for a total colonisation time of at least 8 days (such as 8 to 12 days);
d. drying the mycelium at 40 to 50 °C for 3 to 5 hours, then at 85 to 95 °C for 2 to 4 hours to obtain the mycelium-based structure.

Optionally, the fungus is any of *Pleurotus ostreatus*, *Pleurotus pulmonarius*, *Pleurotus populinus*, *Pleurotus eryngii, Ganoderma lucidum, Trametes versicolor, Phanerochaete chrysosporium, Lentinula edodes*, *Hypsizygus ulmarius* or a combination thereof.

In step a., the substrate is soaked in water to achieve an optimal moisture content of 60-75 %, optionally 65-70 %, ensuring proper hydration for fungal colonization. Soaking softens the substrate, such as hemp fibres, making it more accessible to fungal enzymes such as cellulases, hemicellulases and ligninases, which facilitate colonization. This process also eliminates natural antifungal compounds that could inhibit fungal growth.

A standard soaking method comprises a step of submerging the substrate in clean water at room temperature (app. 20°C) for 24-48 hours. Water should be changed after app. 12 hours if it becomes murky to prevent bacterial contamination. For faster substrate readiness, an accelerated soaking method comprises a step of submerging the substrate in clean warm water (app. 50-60°C) for 12-24 hours. This method speeds up substrate softening, making it easier for fungi to penetrate while maintaining substrate integrity.

In general, the moisture level must be controlled, and the substrate should be wet but not dripping. The fibre structure should remain loose enough to allow airflow while ensuring mycelial attachment. Whatever substrate is used, it must retain required lignocellulosic properties to support fungal growth and structural formation.

In step b., once the substrate is hydrated to 60-75 % moisture content, the inoculation mixing step begins. This step ensures rapid and uniform colonization by introducing fungal mycelium in a controlled manner while preventing contamination. The soaked substrate is inoculated with at least one fungal strain, wherein 85-98 wt. %, such as 90 wt. %, of the substrate is mixed with 1-15 wt. %, such as 10 wt. %, of fungal spawn and with 1-3 wt. %, such as 2.7 wt. % of the nutrient material. The fungal strain can be selected from *Pleurotus ostreatus, Pleurotus pulmonarius, Pleurotus populinus, Pleurotus eryngii, Ganoderma lucidum, Trametes versicolor, Phanerochaete chrysosporium*, *Lentinula edodes*, *Hypsizygus ulmarius* or a combination thereof. A high spawn rate of 10-15 wt. % is used to accelerate colonization, ensuring fungi establish dominance before contaminants can take hold. However, even 1 wt. % spawn could be enough to reach the same colonization level, if working in highly sterile and controlled conditions.

For optimal growth, grain and sawdust fungal spawn types can be used. Grain spawn allows for faster colonization due to high nutrient content but requires sterile handling to prevent contamination. Sawdust spawn achieves lower colonization but promotes denser, more resilient mycelial growth and is less prone to contamination than grain spawn.

The nutrient material digestible by at least one fungus is a carbohydrate source, such as flour and in particular wheat flour, rye flour, rice flour, oat flour or corn flour.

In step c., once inoculated, the mixture is placed into a breathable moulding form to create an optimal fungal growth environment. This inoculation moulding step is critical for defining the density, strength and durability of the final structure. Temperature is maintained between 20 and 26 °C to support rapid colonization and ensure optimal mycelial activity. Humidity is kept between 90 and 95 % relative humidity to prevent substrate drying. Air exchange is limited to CO₂-rich conditions (2000-5000 ppm) to encourage dense and cohesive mycelial growth. Incubation can be conducted in darkness, as light is not required at this stage. The incubation period lasts at least 8 days, depending on environmental conditions and fungal activity.

The moulding form has a negative shape of the final structure and can be 3D-printed or even a DIY cardboard-based. In general, the moulding form must be made of a material that is not degraded by mycelium. The moulding form can comprise tubular or various 3D elements (cavity-like elements), cross-sectional and/or penetrating the moulding from only from one side, creating a negative shape around which the mycelium can grow, and thus form through-holes and/or cavities and/or the vertical cut-in gap in the final structure. The cavity can be generally created only in the rounded belly portion, so as not to weaken the hook portion. The moulding form can be used with an auxiliary moulding form of smaller dimensions, capable of fitting within the main moulding form to create a mycelium-based structure with a U-shaped cross-section, where the mycelium forms a one-sidedly accessible cavity and grows only in the gaps between the main and auxiliary moulding forms. Such structures, U-shaped in cross-section, can be further cultivated together in pairs, with their cavities oriented adjacent to each other, resulting in one larger cavity.

The mixture is compacted into pre-designed moulding forms, ensuring the intended shape is maintained. Moderate compression (to 60-70 % volume of the moulding form) is applied to enhance mycelial bonding without restricting airflow.

For structures requiring additional reinforcement in the hook portion, long hemp fibres can be placed within the moulding form before or during substrate packing. These hemp fibres act as an internal support network, improving tensile strength and structural resilience. The natural integration of fibres into the mycelial matrix ensures a uniform, reinforced form without disrupting the biodegradability of the material. The moulding forms allow for limited gas exchange, ensuring continued fungal growth while preventing excessive moisture loss. By incorporating hemp fibres in the hook portion, the material gains increased load-bearing capacity, making it more resistant to stress while maintaining its lightweight and biodegradable nature.

As colonization completes, the mycelial network solidifies, ensuring that the form maintains its shape before drying. This stage is critical for achieving uniform fungal distribution, minimizing weak points in the material; strong internal binding that remains stable after dehydration; and a balance between biodegradability and durability for practical applications. This phase finalizes the biological formation of the material, preparing it for the drying and structural hardening process.

In step d., once the colonization phase is complete, the moulded structure undergoes a controlled drying process to remove excess moisture while preserving its integrity. This step ensures the material is stable, structurally sound, and no longer biologically active.

The drying process can be carried out using various methods, including a drying chamber, industrial convection ovens, vacuum dryers, infrared drying, freeze-drying or even a solar oven for a low-energy, eco-conscious approach. Drying conditions should ensure gradual moisture removal to maintain structural integrity and prevent warping. In small-scale applications, a standard home oven can also be used, provided the temperature and drying duration follow the required parameters.

To prevent material shrinkage or cracking, moisture is removed gradually. The drying process begins with a low-temperature drying phase to allow slow and even evaporation. The colonized structure is placed in an oven or a drying chamber at 40 to 50 °C for 3 to 5 hours, such as at 45 °C for approximately 4 hours. The oven door can be left slightly open during this phase to allow moisture to escape, which ensures that most of the free water is removed while avoiding thermal shock to the structure. The gradual moisture reduction helps retain the fibrous integrity of the structure, preventing deformation or excessive brittleness. Drying first below 40 °C slows down the process and increases contamination risk due to prolonged moisture exposure. Despite of reducing thermal stress, potentially improving structural flexibility, they are not recommended for efficient production. Drying first above 50 °C accelerates moisture removal, but can lead to surface hardening, shrinkage or internal cracking. Some brittleness may occur, affecting durability. Drying first for less than 3 hours risks incomplete drying, microbial growth and structural deformation. Shorter drying may work if combined with controlled humidity and ventilation, but it is not ideal for long-term stability. Drying first for more than 5 hours ensures better structural stability but may cause excessive hardening and impact biodegradability and uses too much energy.

After the initial drying step, the form undergoes higher-temperature baking to further reduce internal moisture and solidify the structure. The temperature is increased to 85 to 95 °C, such as 90 °C, with the oven door closed for 2 to 4 hours, such as for 3 hours. This phase completes the dehydration process, removing any residual water while reinforcing the material's rigidity. The drying temperature is carefully controlled to prevent charring or over-drying, which could compromise the form's structural properties. Drying then below 85 °C risks incomplete mycelium deactivation, leading to unwanted regrowth, warping or mould susceptibility. While it may preserve flexibility, longer drying times would be required to achieve full moisture removal. Drying then above 95 °C, although ensuring full mycelium deactivation, preventing contamination or regrowth, excessive heat may cause brittleness, excessive shrinkage and reduced mechanical resilience. Drying then for less than 2 hours risks insufficient drying, residual moisture retention, leading to warping, microbial growth, and structural instability. A shorter drying time might work in controlled environments (e. g. vacuum drying), but not under standard conditions. Drying then for more than 4 hours ensures moisture removal and long-term stability, but may lead to brittleness, unnecessary energy use, and degradation of mycelium's natural shock-absorbing properties. Active mycelium in the final structure can lead to structural warping, unwanted colonization and mould contamination in humid environments. To prevent this, proper drying (85-95 °C for 2-4 h) ensures full mycelium deactivation while preserving structural integrity.

The drying step is designed to eliminate all biologically active mycelium. At temperatures above 80 °C, the fungal network ceases metabolic activity, ensuring the material remains inert. This prevents unintended fungal growth after deployment while maintaining the structure's biodegradability. The absence of living mycelium ensures stability in storage and transportation. Once the drying process is complete, the final form exhibits: structural stability, maintaining its intended shape without deformation; lightweight yet durable composition, suitable for handling and application; and resistance to premature degradation, allowing controlled biodegradability when exposed to natural conditions. This final stage completes the transformation of the colonized substrate into a functional, fully formed material, ready for deployment in its intended application.

After completing the drying and structural hardening process, the material reaches its final state. This phase ensures the product meets the required standards for structural integrity, biodegradability, and functional performance while remaining completely inert. The final material retains a rigid yet lightweight structure, offering durability while ensuring it remains biodegradable over time. The fibrous mycelial network formed during colonization provides high structural cohesion, preventing fragmentation. The drying process fully deactivates the fungi, ensuring that no further biological growth occurs. The structure maintains its intended shape even after exposure to external environmental conditions such as humidity and temperature fluctuations.

While designed to be biodegradable, the product maintains moderate moisture and thermal resistance to ensure functionality in various conditions. Surface rigidity prevents immediate water absorption, allowing for a controlled breakdown process rather than rapid disintegration. Thermal processing during drying reinforces the material's form, preventing collapse under mild environmental stress.

The final form is adaptable to various use cases due to its combination of lightweight properties, biodegradability, and natural strength. The material can be tailored in density and thickness based on specific application requirements. The composition can be adjusted to incorporate various lignocellulosic materials while maintaining similar performance characteristics. The design is scalable for small-batch production or large-scale manufacturing, making it suitable for widespread deployment.

Since the structure is fully dried and inert, it can be stored for extended periods without risk of biological reactivation. Storage in dry, ventilated conditions prevents any moisture absorption that could affect structural integrity. The material remains stable in standard temperature ranges, ensuring ease of transportation and deployment. The combination of durability, biodegradability, and adaptability makes this material an effective solution for sustainable, nature-integrated applications while maintaining scalability for diverse industrial and ecological uses.

### Two-step colonization method with one species

Optionally, a two-step colonization is performed in steps b. and c. A two-step colonization is more time- and cost-consuming than the one-step colonization described above, and at the same time, less risky in terms of mould or bacterial contamination. A two-step sequential colonization method can still be applied for a single species to reduce contamination risk and ensure a robust mycelial network before moulding.

Firstly, in step b., the substrate is mixed with the fungal spawn as a mycelium precursor and optionally with the nutrient material in a container to form a mixture, allowing the mycelium to colonise the substrate from the mycelium precursor at least for 5 days (such as for 5-7 days). This step ensures strong mycelial development before the step described below, reduces contamination risk and strengthens early mycelium networks. If the nutrient material is added in step b., further nutrient material might or might not be added in step c. to the mixture to a total content of 3 wt. %.

Then, in step c., the mixture is transferred from the container in a moulding form, optionally mixed with the nutrient material and the mycelium is allowed to further colonise at least for 3 more days (such as for 3-5 days). If the nutrient material is not added in step b., it is added in step c.

The soaked substrate is inoculated with one fungal strain, comprising 85-98 wt. %, such as 90 wt. %, of the substrate, 1-15 wt. %, such as 10 wt. %, of the fungal spawn, and 1-3 wt. % of the nutrient material.

Once inoculated, the mixture is placed into a breathable bag, bucket or incubation container to create an optimal fungal growth environment. The incubation conditions can be the same as introduced above in step c. (20-26 °C, 90-95 % relative humidity, 2000-5000 ppm CO₂, darkness or light). The incubation period lasts at least 5 days (such as 5-7 days), depending on environmental conditions and fungal activity. Empirically, the incubation period can last as long as the mixture has a whitish surface. As soon as the mixture turns into a brownish texture and/or a yellowish enzymatic fluid appears, it indicates that the mycelium gets mature and that the initial colonization phase should be terminated.

After the initial colonization phase, once the mixture has undergone at least 5 days of colonization, it is placed into a moulding form, where it undergoes further colonization and shaping to allow full integration of the fungal strain. This phase is critical for defining the final form's density, strength, and durability. The incubation conditions can be the same as introduced above in step c. (20-26 °C, 90-95 % relative humidity, 2000-5000 ppm CO₂, darkness or light). The incubation period lasts at least 3 days (such as 3-5 days), depending on environmental conditions and fungal activity. After the final drying step (as described above), the structure results in a balanced material that is resistant to premature degradation while remaining fully compostable.

Equally to the one-step colonization, the moulding form has a negative shape of the final structure and can comprise various 3D elements (cavity-like elements), cross-sectional and/or penetrating the moulding from only from one side, creating a negative shape around which the mycelium can grow.

### Two-step colonization method with two species

Optionally, a two-step colonization is performed in steps b. and c. A two-step colonization is more time- and cost-consuming than the one-step colonization described above, and at the same time, less risky in terms of mould or bacterial contamination.

Firstly, in step b., a first portion of the substrate is mixed with fungal spawn of *Pleurotus ostreatus* and/or *Ganoderma lucidum* as a first mycelium precursor and optionally with the nutrient material to form a mixture A in a first container, allowing the mycelium to colonise the substrate from the first mycelium precursor at least for 5 days (such as for 5-7 days); and a second portion of the substrate is mixed with fungal spawn of *Pleurotus pulmonarius* as a mycelium precursor and optionally with the nutrient material to form a mixture B in a second container, allowing the mycelium to colonise the substrate from the second mycelium precursor at least for 5 days (such as for 5-7 days). This step ensures strong mycelial development before the step described below, reduces contamination risk and strengthens early mycelium networks. **If** the nutrient material is added in step b., further nutrient material might or might not be added in step c. to each mixture to a total content of 3 wt. %.

Then, in step c., the mixtures A and B are mixed together in a weight ratio of 2:3 to 3:2 and further optionally with the nutrient material, placed in a moulding form and the mycelium is allowed to further colonise both portions of the substrate from the first and second mycelium precursors for at least for 3 more days (such as for 3-5 days). If the nutrient material is not added in step b., it is added in step c.

In other words, two distinct fungal strains can be introduced separately before being combined. A fast-colonizing, cellulose-degrading strain of *Pleurotus pulmonarius* spreads rapidly within the first 5-7 days, acting as a pioneer species, outcompeting contaminants while efficiently degrading cellulose and hemicellulose and softening the substrate. A slow-colonizing, lignin-degrading strain of *Pleurotus ostreatus* and/or *Ganoderma lucidum* develops a denser mycelial network, binding the substrate more effectively, specializing in lignin degradation, reinforcing structural integrity and improving durability.

The soaked substrate is divided into two separate batches, each inoculated with one fungal strain. Mixture A comprises 85-98 wt. %, such as 90 wt. %, of the substrate, 1-15 wt. %, such as 10 wt. %, of the slow-growing fungal spawn (*Pleurotus ostreatus* and/or *Ganoderma lucidum*) and optionally 1-3 wt. % of the nutrient material. Mixture B comprises 85-99 wt. %, such as 90 wt. %, of the substrate, 1-15 wt. %, such as 10 wt. %, of the fast-growing fungal spawn (*Pleurotus pulmonarius*) and optionally 1-3 wt. % of the nutrient material.

Once inoculated, the mixtures A and B are separately placed into breathable bags, buckets or incubation containers to create an optimal fungal growth environment. Optionally, 1-3 wt. % of the nutrient material is added to a total content of 3 wt. %. The incubation conditions can be the same as introduced above in step c. (20-26 °C, 90-95 % relative humidity, 2000-5000 ppm CO₂, darkness or light). The incubation period lasts at least 5 days (such as 5-7 days), depending on environmental conditions and fungal activity.

The fast-growing fungal strain spreads aggressively during the initial colonization phase, rapidly establishing dominance over its respective substrate batch. In parallel, the slow-growing, lignin-degrading strain develops a denser mycelial structure within its separate batch, reinforcing substrate integrity. Once the separately colonized substrates are combined during a secondary colonization phase, the fast-colonizing strain has already synergistically softened the material, making it easier for the slower strain to penetrate and further strengthen the structure.

Initial separate colonization ensures each fungal strain can establish without competition, optimizing their respective growth phases. Fast-colonizing fungi create a protective layer, reducing contamination risk before the slower strain reinforces the material. Balanced structural formation is achieved through sequential fungal activity rather than immediate competition. The methodology remains adaptable, supporting similar fungal pairings with complementary colonization dynamics. Scalable for both small-batch and industrial applications, ensuring consistency in production. This structured inoculation and colonization process ensures optimal fungal integration, setting the stage for a secondary colonization and moulding.

After the initial colonization phase, the two separately inoculated substrates are combined to achieve a balanced fungal network. This step ensures that the final material integrates the fast-colonizing and strong-binding fungal strains, enhancing both production efficiency and structural integrity. Once each substrate mixture (A and B) has undergone at least 5 days of independent colonization, they are mixed in a weight ratio of 2:3 to 3:2, such as in a weight ratio of 1:1, to maximize biological synergy and structural uniformity. The fast-growing fungal strain has already spread extensively, establishing a protective mycelial layer that reduces contamination risk. The slow-growing strain, once integrated, strengthens the substrate by developing a denser binding network, improving material integrity and durability. By combining the pre-colonized substrates at this stage, mycelial interaction occurs in a controlled and optimized environment, ensuring a uniform fungal distribution without direct early competition. This sequential approach results in a well-integrated, stable, and cohesive final structure, preparing the material for moulding and secondary colonization within its final shape.

After blending the two colonized substrate mixtures A and B, the mixture is placed into a moulding form, where it undergoes further colonization and shaping to allow full integration of both fungal strains. This phase is critical for defining the final form's density, strength, and durability. The incubation conditions can be the same as introduced above in step c. (20-26 °C, 90-95 % relative humidity, 2000-5000 ppm CO₂, darkness or light). The incubation period lasts at least 3 days (such as 3-5 days), depending on environmental conditions and fungal activity. During this stage, the slow-growing fungal strain further strengthens the structure, reinforcing the bonds formed by the fast-growing strain. After the final drying step (as described above), the incorporation of both fast-growing and strong-binding fungal strains results in a balanced material that is resistant to premature degradation while remaining fully compostable.

Equally to the one-step colonization, the moulding form has a negative shape of the final structure and can comprise various 3D elements (cavity-like elements), cross-sectional and/or penetrating the moulding from only from one side, creating a negative shape around which the mycelium can grow.

### Seed incorporation method

Concerning the mycelium-based structure comprising plant seeds, there are three possible ways of embedding the plant seeds within the structure: encapsulation, mid-stage colonization and late-stage colonization.

In the encapsulation method, hollow cavities (capsules) are integrated within the structure during the moulding phase. The seeds are poured into these cavities and sealed with a plug made of the same biodegradable mycelium-substrate composite. The capsules remain protected from external elements (e. g. humidity, heat fluctuations, predation). Once the structure degrades (or is intentionally crushed by an operator), the seeds are released into the soil for natural germination.

In the mid-stage colonization method, the seeds are embedded into pre-colonized substrate fragments that are broken up and mixed into the primary mycelium-substrate mixture before the final moulding stage. During the second colonization phase, the seeds become integrated directly into the body of the structure. The seeds are shielded within the structure, benefiting from protection against external elements while maintaining the potential for germination. As the structure degrades, seeds are released gradually into the surrounding environment. While germination rates may vary due to exposure during the colonization process, this method increases the potential number of viable seeds dispersed naturally.

In the late-stage colonization method, instead of confining all seeds in capsules, this method involves distributing the seeds at the final stage of mycelium colonization. This allows the seeds to be covered by mycelium near the surface, but not consumed completely, ensuring viability through the drying process. The seeds remain evenly distributed on the surface, making dispersal possible upon natural fragmentation or operator intervention.

For applications requiring greater water resistance, natural hydrophobic coatings such as beeswax or chitin-based solutions can be applied. Beeswax coating forms a water-repellent layer while allowing slow biodegradation. Chitin-based coating is derived from natural biopolymers, enhances structural strength and moisture resistance while remaining eco-friendly. If enhanced water resistance is needed, these treatments can be applied post-drying through dipping, brushing, or spraying techniques, depending on application requirements. These optional coatings ensure greater resilience in humid environments while preserving the form's biodegradability and ecological function.

### Outer coating application method

Concerning the mycelium-based structure comprising an outer protective coating, there are three possible ways of coating the structure: dip-coating, spray-coating and infusion during mycelium growth.

In the dip-coating method, the finished structure is partially or fully submerged in a heated, liquefied solution of cutin or beeswax. Once removed, it dries naturally, forming a breathable yet water-resistant layer. This method is suitable for large-scale production (solar parks, urban and water-based applications), ensuring even distribution across the entire surface.

In the spray-coating method, a fine mist of cutin/beeswax solution is sprayed onto the surface of the finished structure. This allows for localized waterproofing, such as bottom sections or outer surfaces. This method is suitable for reducing material usage while keeping specific areas breathable, such as in targeted applications where only one side needs waterproofing. Spray-coating only on exposed areas prevents excessive waterlogging while allowing inner sections to remain breathable.

In the infusion method, cutin is mixed into the substrate, allowing partial absorption into the mycelium structure. This results in internal water repellence while keeping the outer surface untreated for biodegradability. This method is suitable for applications requiring longer durability while still decomposing naturally, such as in underground or high-humidity environments where moisture balance is crucial.

The spray-coating and the infusion methods can be combined for underwater applications, providing different rates of decomposition and ensuring gradual breakdown over time.

### 3D printing method

Optionally, the mixture(s) prepared in step b. of the above-described one-step or two-step methods can be a paste-like substance suitable for a mycelium 3D printing method (see the publication by Yang et al., titled "3D-Printed Mycelium Biocomposites: Method for 3D Printing and Growing Fungi-Based Composites" and available at DOI: 10.1089/3dp.2023.0342). Step c. of the above-described methods can then be replaced by placing the mixture in a 3D printing device, printing the mycelium-based structure and allowing the mycelium to colonise the substrate from the mycelium precursor for a total colonisation time of at least 8 days (such as 8 to 12 days). Steps a. and d. can remain the same as above, or the parameters can be slightly modified (50 to 75 % moisture content in step a., as also recommended by the publication cited herein and airdrying at ambient temperature for at least 24 h in step d.).

### Use of the mycelium-based structure

In the fifth aspect of the invention, the object of the present invention is achieved by use of the above-mentioned mycelium-based structure in freshwater, seawater, on the ground or underground. For a more detailed description, see examples.

In the sixth aspect of the invention, the object of the present invention is achieved by use of the above-mentioned mycelium-based structure or the above-mentioned assembly in a solar park, an urban area or an industrial area. For a more detailed description, see examples.

In particular for solar parks, the structure is specifically designed to fit around standardized rectangular pillars typically used in fixed solar parks. Its design ensures it cannot easily detach, requiring a deliberate action for installation - hand gesture. The softer outer surface of the mycelium-based structure lightly embeds into or adheres to the solar panel support pillar, increasing stability by creating a natural grip. The structure slots naturally between solar panel support beams, using its own balance for stability and provides shaded shelter for species benefiting from cool, moisture-regulated environments. This also prevents overheating of the structure and keeps habitat safely tucked away from direct sunlight, benefiting shade-adapted species.

### A rollable mycelium-based structure

In the seventh aspect of the invention, the object of the present invention is achieved by a mycelium-based structure, comprising: mycelium of at least one fungus; a substrate of discrete particles bonded together by the mycelium; and a porous carrier, optionally impregnated with at least one nutrient. The substrate comprises plant biomass and the porous carrier is biodegradable. Such a composition of fully renewable biomaterials forms a lightweight yet durable structure. Within the context of this invention, mycelium means a network of interconnected mycelia cells, extending through and around the discrete particles of the substrate.

The underlying idea of the mycelium-based structure according to the present invention is the shape of the structure, the shape being rollable for easy rolling across diverse terrains such as sandy deserts, rocky plains, or sloped landscapes. The shape is optionally selected from spherical, cylindrical, ellipsoidal, hemispherical or polygonal. This versatility allows for deployment in a variety of ecological and geographical conditions. The rollable shape ensures continuous movement facilitated by external forces, such as wind or gravity, allowing the device to cover broad areas with minimal intervention. This makes it ideal for use in remote or inaccessible regions where traditional deployment methods are impractical.

Optionally, the mycelium-based structure comprises a porous carrier selected from biochar, activated carbon, lignite-derived humic acid or a derivative thereof, zeolite, diatomaceous earth or a clay mineral (e. g. bentonite or montmorillonite), providing a suitable carrier for nutrient impregnation.

Optionally, the porous carrier is impregnated with nutrients selected from nitrogen, phosphorous, potassium and/or trace elements (e. g. magnesium, calcium, sulphur, zinc, manganese, iron, copper, boron, molybdenum) for facilitating controlled and prolonged nutrient release into the soil as the mycelium structure biodegrades over time. The porous carrier, due to its high porosity, provides a stable, environmentally friendly and efficient nutrient reservoir. Nutrient impregnation enhances overall ecological restoration effectiveness. Optionally, the porous carrier is used in combination with any of the substrates listed herein and arranged within the structure (embedded in its core) and not contacting the surface of the structure due to its sensitivity to humidity. In other words, the porous carrier is preferably covered completely with the mycelium.

Optionally, the mycelium-based structure comprises an inner core comprising the porous carrier, and an outer shell comprising the remaining components (mycelium, substrate). The outer shell is therefore free of the porous carrier and the mycelium and/or the substrate can be comprised in the inner core as well. Mycelium acts as a binding material that holds the inner core components together and gradually degrades, enabling the controlled release of nutrients. The porous structure of the carrier, combined with mycelium's nutrient absorption and retention properties, enhances soil fertility, water retention and microbial activity over time.

The outer shell is therefore biodegradable and eco-friendly. Mycelium provides structural integrity during transport and deployment while also contributing organic matter to the soil as it decomposes. The outer shell is designed to degrade gradually, ensuring a controlled release of nutrients into the surrounding environment. During decomposition, the mycelium integrates with the soil, improving its organic content and water retention capacity. The outer shell shields the nutrient-rich, inner core from external elements such as moisture, UV radiation and physical damage during deployment. Its durability ensures the integrity of the device until it reaches its intended destination.

The inner core comprises a mixture of the porous carrier (such as biochar), at least one nutrient (such as nitrogen, phosphorous, potassium, magnesium, calcium, sulphur, zinc, manganese, iron, copper, boron, molybdenum), and optionally other soil-enhancing materials. These components are selected based on their ability to address specific soil deficiencies, improve fertility and support vegetation growth. Biochar acts as a stable carbon reservoir, enhancing soil structure, water retention, and microbial activity. Its porous structure creates microsites for storing nutrients and hosting beneficial microorganisms, fostering long-term soil health. Mycelium colonizes and binds the inner core, creating a cohesive structure that resists fragmentation during deployment. The mycelium's gradual degradation ensures a controlled and consistent release of nutrients over time. The inner core materials can be pre-treated to enhance their absorption and retention of essential elements, such as soaking biochar in nitrogen or phosphorus solutions to increase nutrient availability upon release.

The inner core can comprise a plurality of capsules, which can release specific nutrients or minerals at different intervals, enabling controlled and prolonged soil enrichment. Separate compartments for different nutrient types or soil amendments can be included to target specific soil deficiencies effectively. The inner core can comprise multiple layers of the nutrient-enriched porous carrier, mycelium and substrate, designed to decompose at varying rates to provide a sustained release of beneficial materials over time. The structure can comprise a plurality of randomly scattered bits of the porous carrier within the structure matrix, wherein in this case, the scattered bits can come also form part of the surface of the structure. Such a structure matrix can also form an outer shell with an inner core as described above.

The porous carrier can be in the form of dust, multiple small fragments and/or at least one solid piece. There might or might not be mycelium cross-linking the porous carrier. Once the mycelium in the outer shell collapses, the porous carrier can be released at a specific location. In general, the porous carrier can vary in composition and structure. It may comprise a pure substance, ranging from fine dust to a single solid piece, or it can be a mycelium-supported, cross-wired structure. Additionally, a combination is possible, where multiple smaller capsules or spheres within the matrix comprises the porous carrier in a pure or a mycelium-cross-linked form.

The size and weight of the device can be adjusted to suit specific requirements, such as soil conditions, wind patterns, or safety concerns. For instance, smaller, lightweight versions may be deployed in areas with high wind activity to prevent unintended damage (such as to local flora and fauna) or displacement, while larger versions can be used in stable regions to maximize nutrient distribution.

Optionally, the surface of the structure can be modified with grooves, ridges or perforations to regulate nutrient release and enhance interaction with the terrain. These features ensure even distribution of nutrients and improve the device's rolling efficiency. Textured surfaces or reinforced edges can be incorporated to improve mobility and ensure stability on uneven or rocky terrain.

Optionally, the structure comprises a UV-resistant coating for sunny regions or a water-absorbing material for arid zones, to suit different climates.

Optionally, the herein disclosed aspects of specific fungal species, their combinations and suitability (including the specific combinations of *P. ostreatus* and *P. pulmonarius,* and *G. lucidum* and *P. pulmonarius*), specific substrates, their combinations and suitability (including hemp hurd, hemp fibres), first through-holes and/or cavities, various additives or add-ons in the structure (pigment, dye, plant seeds, outer protective coating, nutrient material, hydrocolloid binder, electronics, buoyancy-adjusting features, water-stabilizing and wave-resisting features, surface textures, adhesion mechanisms, aerodynamic load-bearing features, moisture-control features), and one-step as well as two-step colonization methods for production of the above-mentioned mycelium-based structure, seed encapsulation methods, outer coating application methods and 3D printing methods also relate the rollable-shaped structure described in this aspect.

The structure can be deployed aerially (such as with drones or aircraft), manually or with the assistance of wind and/or gravity (thus making use of natural wind patterns and/or sloped or uneven terrains). Upon deployment, the outer shell comprising mycelium begins to degrade, integrating into the soil and releasing nutrients stored within the inner core. The porous carrier stabilizes soil structure, improves water retention and fosters microbial activity, creating favourable conditions for vegetation growth and long-term soil health.

The structure's deployability and its abiotic core even has an extra-terrestrial potential (such as on Mars) for supporting initial soil conditioning efforts for experimental agriculture, ecosystem establishment or regolith stabilization.

### Description of the drawings

Figures 1 and 2 show the mycelium-based structure in a front and rear perspective views.
Figure 3 shows the mycelium-based structure in a top view.
Figure 4 shows two mycelium-based structures in a top view, interlocked together for packaging, and also comprising a lock and a support in the corners.
Figures 5a and 5b show the mycelium-based structure with reinforcing hemp fibres in a front perspective view.
Figures 6a to 6d show the mycelium-based structure with tapered bottom edges in various views.
Figures 7a to 7i show the mycelium-based structure with at least one first through-hole or cavity in various views.
Figures 8a and 8b show the mycelium-based structure with a vertical cut-in gap in a front perspective view.
Figures 9a to 9d show the mycelium-based structure with electronics in various views.
Figures 10a to 10f show the assembly of the mycelium-based structure and the mycelium-based lock.
Figures 11a and 11b show the assembly of the mycelium-based structure and the mycelium-based support.
Figures 12a and 12b show moulding forms for the mycelium-based structure and the mycelium-based lock and/or support.
Figures 13a to 13f show the mycelium-based structure with a rollable, spherical shape in a cross-sectional view.

### Examples

### Example 1

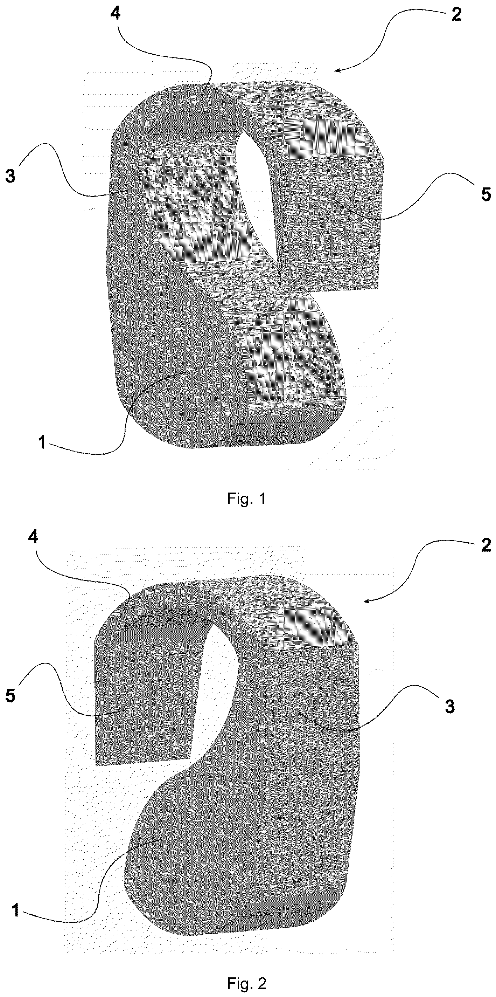

Fig. 1, 2 and 3 show the mycelium-based structure comprising: a rounded belly portion (1); and a hook portion (2). The hook portion (2) comprises: a proximal straight section (3) attached to the rounded belly portion (1); a curved section (4) attached to the proximal straight section (3); and a distal straight section (5) attached to the curved section (4). The proximal and distal straight sections (3, 5) are oriented in parallel to each other and the curved section (4) is an arc. The proximal straight section (3) has a tapered shape narrowing towards the curved section (4) and widening towards the rounded belly portion (1). The distal straight section (5) has a tapered shape widening towards the curved section (4) and narrowing towards a distal end of the distal straight section (5).

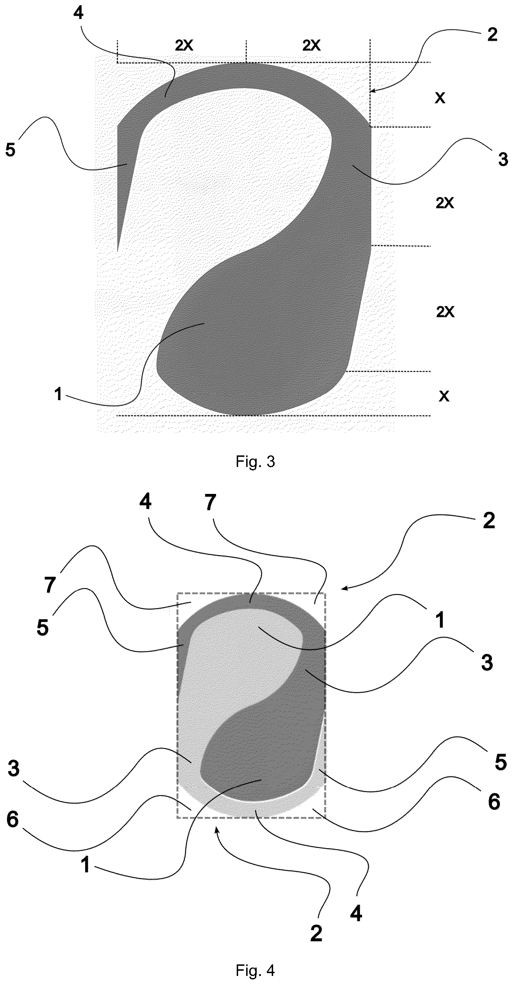

Fig. 3 further shows an example of dimensional ratios of the structure. X can be any positive number associated with a unit of length, such as 2, 5, 8, 10 etc. The thickness of the structure can be 2X (depth is not shown in Figure 3). The hook portion can have a thickness between 0.3X and 0.6X, such 0.3X, 0.4X, 0.5X, 0.6X.

As an example structure, X can be 5 cm, the structure can be 30 cm tall, 20 cm wide and 10 cm thick, and the hook portion can be 2 cm thick. As another example, X can be 10 cm, the structure can be 60 cm tall, 40 cm wide and 20 cm thick, and the hook portion can be 5 cm thick. As another example, X can be 10 cm, the structure can be 60 cm tall, 40 cm wide and 20 cm thick, and the hook portion can be 6 cm thick. As another example, X can be 4 cm, the structure can be 24 cm tall, 16 cm wide and 8 cm thick, and the hook portion can be 1.2 cm thick.

### Example 2

Fig. 4 shows two mycelium-based structures of Example 1 in a top view, interlocked together for a box-like (rectangular) packaging. The rounded belly portion 1 of one structure fits within the hook portion 2 of another structure and vice versa. The four corners remaining in the packaging are filled with two mycelium-based locks 6 and two mycelium-based supports 7. The number of locks and supports is illustrative, there can be 0-4 locks 6 or 0-4 supports 7 or any combination of the locks 6 and supports 7 up to 4 in total.

### Example 3

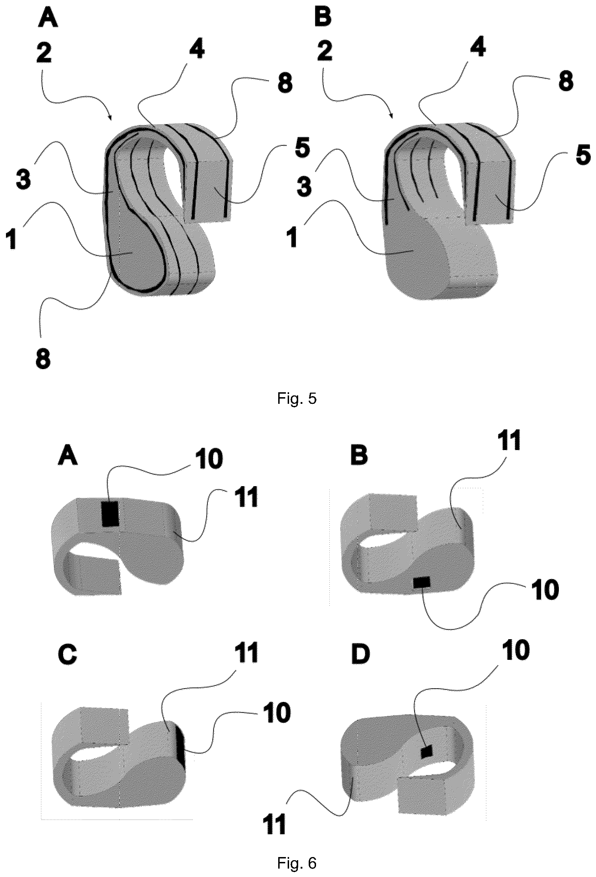

Fig. 5a and 5b show the mycelium-based structure of any of Examples 1-2 in a front perspective view. The structure comprises hemp fibres 8 arranged in the hook portion 2 only (Fig. 5b) or in the hook portion 2 and the rounded belly portion 1 (Fig. 5a) as an internal support network, improving tensile strength, structural resilience of the structure and pressure resistance through a more even pressure distribution.

### Example 4

Fig. 6a to 6d show the mycelium-based structure of any of Examples 1-3 in various views. The rounded belly portion 1 has tapered bottom edges 11 for arranging on or in the ground. The structure further comprises at least one cavity 10 formed in the rounded belly portion 1 or the proximal straight section 3, mimicking burrows used by lizards, snakes, frogs and small rodents.

### Example 5

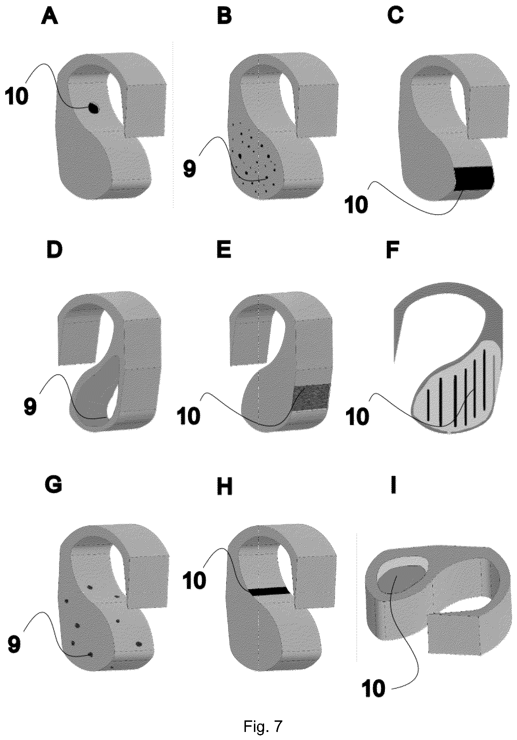

Fig. 7a to 7i show the mycelium-based structure of any of Examples 1-4 in various views. In Fig. 7b, 7d and 7g, there is at least one first through-hole 9 formed in the structure, such as in the rounded belly portion 1 or the proximal straight section 3. In Fig. 7a, 7c, 7e, 7f, 7h and 7i, there is at least one cavity 10 formed in the structure, such as in the rounded belly portion 1 or the proximal straight section 3. Hole or cavity entry shapes can be of any shape, such as circular, oval, square or rectangular. The first through-holes 9 and cavities 10 can have protective, nesting, overwintering, egg-laying, sheltering, ventilation and/or drainage functions.

### Example 6

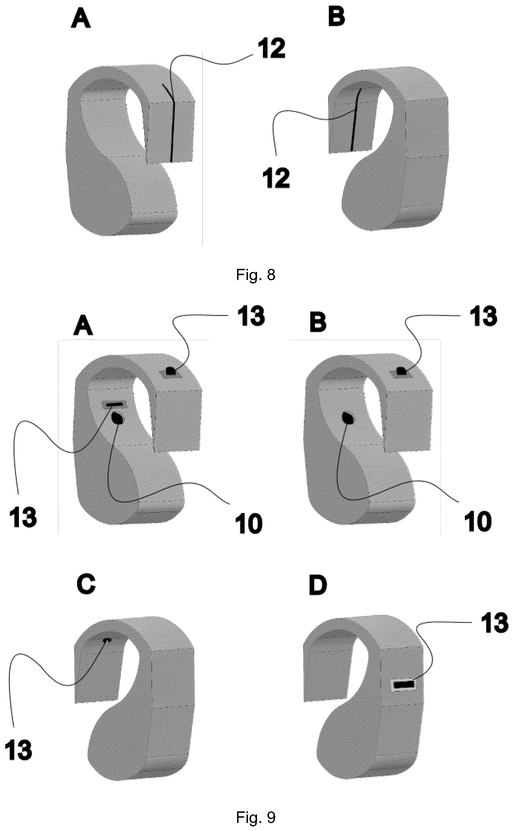

Fig. 8a and 8b show the mycelium-based structure of any of Examples 1-5 in a front and rear perspective views. The structure comprises a vertical cut-in gap 12 in the distal straight section 5, for secure hanging with a simple self-locking mechanism onto industrial thin-bar fences without extra supports. The vertical cut-in gap 12 can be 4 mm wide and can be used between two vertical fencing bars spaced apart by 5 cm.

### Example 7

Fig. 9a to 9d show the mycelium-based structure of any of Examples 1-6 in a front and rear perspective views. The structure comprises electronics 13 in the hook portion 2. The electronics 13 in the proximal straight section 3 (Fig. 7a, 7d) can be a camera, a microphone, an acoustic sensor and/or a motion sensor, for gathering data about wildlife using the cavity 10 as a shelter. The electronics 13 in the curved section 4 can be a temperature sensor, a humidity sensor and/or a light intensity sensor, for gathering environmental data. All other combinations are possible depending on the application.

### Example 8

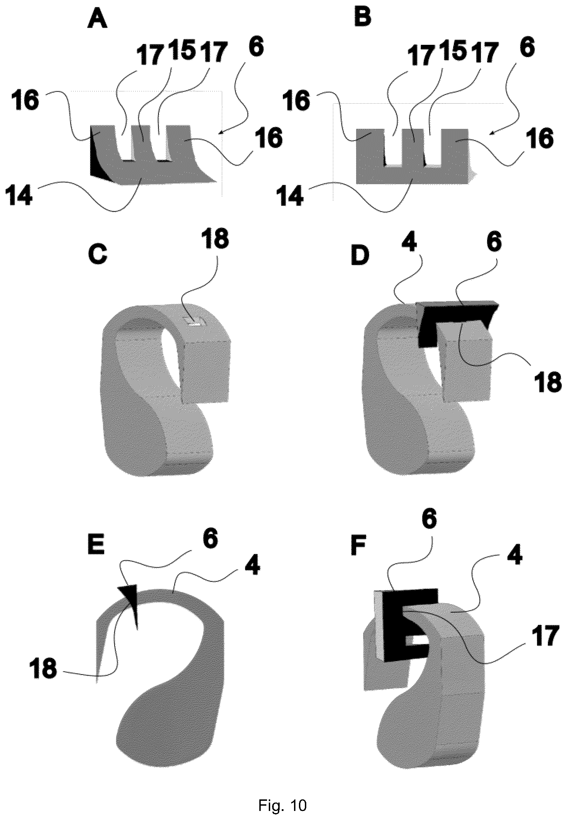

Fig. 10a to 10e show the assembly of a mycelium-based structure of any of Examples 1-7 and a mycelium-based lock 6. The mycelium-based structure comprises a second through-hole 18 in the curved section 4. The mycelium-based lock 6 comprises a base 14 and three wedge-like protrusions 15, 16, which are spaced apart to define two side protrusions 16 and one middle protrusion 15 and which are oriented in parallel to one another to define two gaps 17 between the protrusions 15, 16. The width of the two gaps 17 and the middle protrusion 15 altogether is equal to or larger than the width of the curved section 4 of the mycelium-based structure. The middle protrusion 15 fits in the second through-hole 18. An exemplary vertical bar onto which the assembly is hung passes under the curved section 4 and the lock 6 helps to stabilise the structure against backward movement due to wind.

Alternatively (not shown in figures), the mycelium-based lock 6 can comprise a base 14 and two wedge-like side protrusions 16, which are spaced apart and oriented in parallel to one another to define a gap 17 between the protrusions 16.

Alternatively (not shown in figures), the mycelium-based lock 6 can comprise a base 14 and four wedge-like protrusions 15, 16, which are spaced apart to define two side protrusions 16 and two middle protrusions 15 and which are oriented in parallel to one another to define three gaps 17 between the protrusions 15, 16. The width of two of said gaps 17 and one of the middle protrusions 15 surrounding said two gaps 17 is equal to or larger than the width of the curved section 4 of the mycelium-based structure. The middle protrusion 15 fits in the second through-hole 18.

### Example 9

Fig. 10f shows the assembly of the mycelium-based structure of any of Examples 1-8 and the mycelium-based lock 6, rotated sideways by 90 degrees with respect to the lock 6 of Example 8. One of the gaps 17 formed between the side protrusion 16 and the middle protrusion 15 surrounds the curved section 4. An exemplary vertical bar onto which the assembly is hung passes under the curved section 4 and the lock 6 helps to stabilise the structure against backward movement due to wind when the arrangement of Example 8 is not applicable.

### Example 10

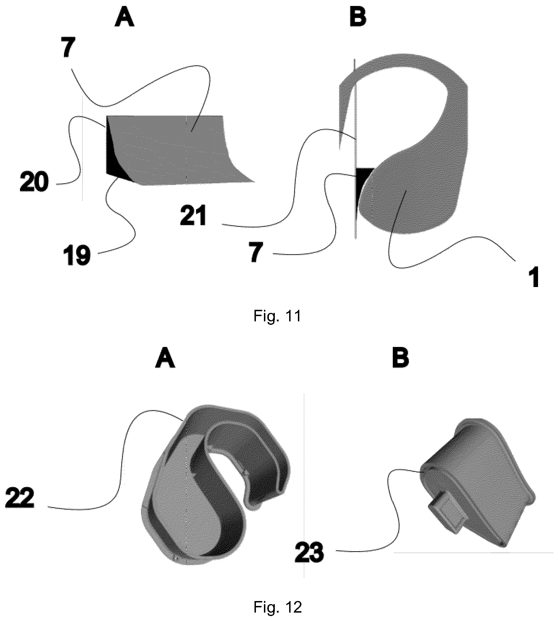

Fig. 11a and 11b show the assembly of a mycelium-based structure of any of Examples 1-9 and a mycelium-based support 7 having a wedge shape with a wedge base 19 and a wedge tip 20. The mycelium-based structure is hung on a horizontal fencing bar with the curved section 4. The vertical fencing bars 21 form a net against which the mycelium-based support 7 can lean, the wedge tip 20 pointing downwards and the wedge base 19 pointing upwards while supporting the rounded belly portion 1. The assembly helps to stabilise the structure against side movements.

### Example 11

Fig. 12a shows a 3D-printed moulding form 22 for the mycelium-based structure of any of Examples 1-10 and Fig. 12b shows a 3D-printed moulding form 23 for the mycelium-based lock 6 or support 7 of Examples 8-10.

### Example 12

A one-step colonization method can be performed as follows:
1. Hemp hurd (the substrate) is supplied clean and is soaked in water until it reaches app. 65-70% moisture content.
2. In a moulding form, the hemp hurd is mixed with fungi spawn of *P. ostreatus* and wheat flour as the nutrient material. The mixture comprises 87.5 wt. % of the hemp hurd and 10 wt. % of the fungal spawn and 2.5 wt. % of the wheat flour.
3. Once colonization is complete after 8-14 days (such as 12-14 days), the moulding form is removed, and the structure is dried in an oven. First for 4 hours at 45 °C with the oven door slightly open to reduce moisture, followed by 3 hours of baking at 90 °C with the door closed.
4. The final structure is fully dried, ensuring no living mycelium remains.

As an alternative example, *P. ostreatus* can be substituted with any of *P. pulmonarius*, *P. populinus*, *P. eryngii*, *G. lucidum*, *T. versicolor*, *P. chrysosporium*, *L. edodes* or *H. ulmarius.*

As an alternative example, hemp hurd can be substituted with any of hemp, straw, hay, wood sawdust, wood chips, bagasse, corn husks, corn cobs, coconut coir and/or spent coffee grounds.

As an alternative example, wheat flour can be substituted with any of rye flour, rice flour, oat flour or corn flour.

Depending on a particular mixture, the moisture content of the substrate can be 60-75 %, the mixture can comprise 85-98 wt. % of the substrate, 1-15 wt. % of the fungal spawn and 1-3 wt. % of the substrate, the colonization can take 10-21 days (also depending on the initial content of fungal spawn, wherein the less fungal spawn, the longer the colonization period) and the drying can be at 40-50 °C for 3-5 hours, then at 85-95 °C for 2-4 hours.

Other possible combinations include:
a. *P. ostreatus* and hemp, *P. ostreatus* and straw, *P. ostreatus* and hay, *P. ostreatus* and wood sawdust, *P. ostreatus* and wood chips, *P. ostreatus* and bagasse, *P. ostreatus* and corn husks, *P. ostreatus* and corn cobs, *P. ostreatus* and coconut coir, *P. ostreatus* and spent coffee grounds;
b. *P. pulmonarius* and hemp, *P. pulmonarius* and hemp hurd, *P. pulmonarius* and straw, *P*. *pulmonarius* and hay, *P. pulmonarius* and wood sawdust, *P. pulmonarius* and wood chips, *P. pulmonarius* and bagasse, *P. pulmonarius* and corn husks, *P. pulmonarius* and corn cobs, *P. pulmonarius* and coconut coir, *P. pulmonarius* and spent coffee grounds;
c. *P. populinus* and hemp, *P. populinus* and hemp hurd, *P. populinus* and straw, *P. populinus* and hay, *P. populinus* and wood sawdust, *P. populinus* and wood chips, *P. populinus* and bagasse, *P. populinus* and corn husks, *P. populinus* and corn cobs, *P. populinus* and coconut coir, *P. populinus* and spent coffee grounds;
d. *P. eryngii* and hemp, *P. eryngii* and hemp hurd, *P. eryngii* and straw, *P. eryngii* and hay, *P. eryngii* and wood sawdust, *P. eryngii* and wood chips, *P. eryngii* and bagasse, *P. eryngii* and corn husks, *P. eryngii* and corn cobs, *P. eryngii* and coconut coir, *P. eryngii* and spent coffee grounds;
e. *G*. *lucidum* and hemp, *G. lucidum* and hemp hurd, *G. lucidum* and straw, *G. lucidum* and hay, *G*. *lucidum* and wood sawdust, *G. lucidum* and wood chips, *G. lucidum* and bagasse, *G. lucidum* and corn husks, *G. lucidum* and corn cobs, *G. lucidum* and coconut coir, *G*. *lucidum* and spent coffee grounds;
f. *T. versicolor* and hemp, *T. versicolor* and hemp hurd, *T. versicolor* and straw, *T. versicolor* and hay, *T. versicolor* and wood sawdust, *T. versicolor* and wood chips, *T. versicolor* and bagasse, *T. versicolor* and corn husks, *T. versicolor* and corn cobs, *T. versicolor* and coconut coir, *T. versicolor* and spent coffee grounds;
g. *P. chrysosporium* and hemp, *P. chrysosporium* and hemp hurd, *P. chrysosporium* and straw, *P. chrysosporium* and hay, *P. chrysosporium* and wood sawdust, *P. chrysosporium* and wood chips, *P. chrysosporium* and bagasse, *P. chrysosporium* and corn husks, *P*. *chrysosporium* and corn cobs, *P. chrysosporium* and coconut coir, *P. chrysosporium* and spent coffee grounds;
h. *L. edodes* and hemp, *L. edodes* and hemp hurd, *L. edodes* and straw, *L. edodes* and hay, *L. edodes* and wood sawdust, *L. edodes* and wood chips, *L. edodes* and bagasse, *L*. *edodes* and corn husks, *L. edodes* and corn cobs, *H. ulmarius* and coconut coir, *L. edodes* and spent coffee grounds; and
i. *H. ulmarius* and hemp, *H. ulmarius* and hemp hurd, *H. ulmarius* and straw, *H. ulmarius* and hay, *H. ulmarius* and wood sawdust, *H. ulmarius* and wood chips, *H. ulmarius* and bagasse, *H. ulmarius* and corn husks, *H. ulmarius* and corn cobs, *H. ulmarius* and coconut coir, *H. ulmarius* and spent coffee grounds.

Any of the combinations above can further include a porous carrier along with the substrate:
a. *P. ostreatus* and biochar, *P. ostreatus* and activated carbon, *P. ostreatus* and lignite-derived humic acid or a derivative thereof, *P. ostreatus* and zeolite, *P. ostreatus* and diatomaceous earth, *P. ostreatus* and bentonite, *P. ostreatus* and montmorillonite;
b. *P. pulmonarius* and biochar, *P. pulmonarius* and activated carbon, *P. pulmonarius* and lignite-derived humic acid or a derivative thereof, *P. pulmonarius* and zeolite, *P*. *pulmonarius* and diatomaceous earth, *P. pulmonarius* and bentonite, *P. pulmonarius* and montmorillonite;
c. *P. populinus* and biochar, *P. populinus* and activated carbon, *P. populinus* and lignite-derived humic acid or a derivative thereof, *P. populinus* and zeolite, *P. populinus* and diatomaceous earth, *P. populinus* and bentonite, *P. populinus* and montmorillonite;
d. *P. eryngii* and biochar, *P. eryngii* and activated carbon, *P. eryngii* and lignite-derived humic acid or a derivative thereof, *P. eryngii* and zeolite, *P. eryngii* and diatomaceous earth, *P*. *eryngii* and bentonite, *P. eryngii* and montmorillonite;
e. *G*. *lucidum* and biochar, *G. lucidum* and activated carbon, *G. lucidum* and lignite-derived humic acid or a derivative thereof, *G. lucidum* and zeolite, *G. lucidum* and diatomaceous earth, *G. lucidum* and bentonite, *G. lucidum* and montmorillonite;
f. *T. versicolor* and biochar, *T. versicolor* and activated carbon, *T. versicolor* and lignite-derived humic acid or a derivative thereof, *T. versicolor* and zeolite, *T. versicolor* and diatomaceous earth, *T. versicolor* and bentonite, *T. versicolor* and montmorillonite;
g. *P. chrysosporium* and biochar, *P. chrysosporium* and activated carbon, *P. chrysosporium* and lignite-derived humic acid or a derivative thereof, *P. chrysosporium* and zeolite, *P*. *chrysosporium* and diatomaceous earth, *P. chrysosporium* and bentonite, *P*. *chrysosporium* and montmorillonite;
h. *L. edodes* and biochar, *L. edodes* and activated carbon, *L. edodes* and lignite-derived humic acid or a derivative thereof, *L. edodes* and zeolite, *L. edodes* and diatomaceous earth, *L. edodes* and bentonite, *L. edodes* and montmorillonite; and
i. *H. ulmarius* and biochar, *H. ulmarius* and activated carbon, *H. ulmarius* and lignite-derived humic acid or a derivative thereof, *H. ulmarius* and zeolite, *H. ulmarius* and diatomaceous earth, *H. ulmarius* and bentonite, *H. ulmarius* and montmorillonite.

### Example 13

A two-step colonization method can be performed as follows:
1. Hemp hurd (the substrate) is supplied clean and is soaked in water until it reaches app. 65-70% moisture content.
2. In an inoculation bag, bucket or container (preferably sterile), the hemp hurd is mixed with fungal spawn of *P. ostreatus.* The mixture comprises 90 wt. % of the hemp hurd and 10 wt. % of the fungal spawn.
3. After 6-8 days of colonization (meaning at least 5 days), the colonized substrate is placed into a moulding form and mixed with 3 wt. % of the wheat flour as the nutrient material (3:100 ratio of the nutrient material and the substrate), where it requires 5-7 additional days (meaning at least 3 days) to fully colonize.
4. Once colonization is complete, the moulding form is removed, and the structure is dried in an oven. First for 4 hours at 45 °C with the oven door slightly open to reduce moisture, followed by 3 hours of baking at 90 °C with the door closed.
5. The final structure is fully dried, ensuring no living mycelium remains.

For further possible combinations of the substrate, the fungal species and the nutrient materials are listed in Example 12 above.

Alternatively, the nutrient material can be mixed with the hemp hurd and fungal spawn of *P*. *ostreatus* in step 2 instead of step 3 to improve and accelerate the initial colonization, and in the same ratio. Although the substrate and water can sustain the initial colonization in step b. even without the nutrient material, the nutrient material is to be added at some point during the colonization.

### Example 14

A two-step colonization method can be performed as follows:
1. Hemp hurd (the substrate) is supplied clean and is soaked in water until it reaches app. 65-70% moisture content.
**2. In** two separate inoculation bags, buckets or containers (preferably sterile), the hemp hurd is mixed with fungal spawn. Mixture A with fungal spawn of *P. ostreatus* and mixture B with fungal spawn of *P. pulmonarius.* Each mixtures comprises 90 wt. % of the hemp hurd and 10 wt. % of the respective fungal spawn.
3. After 6-8 days of colonization (meaning at least 5 days), the two separately colonized substrates are combined in equal (50-50%) weight portions and mixed with 3 wt. % of the wheat flour as the nutrient material (3:100 ratio of the nutrient material and the total substrate). The new mixture is then placed into a moulding form, where it requires 5-7 additional days (meaning at least 3 days) to fully colonize.
4. Once colonization is complete, the moulding form is removed, and the structure is dried in an oven. First for 4 hours at 45 °C with the oven door slightly open to reduce moisture, followed by 3 hours of baking at 90 °C with the door closed.
5. The final structure is fully dried, ensuring no living mycelium remains.

Alternatively, the nutrient material can be mixed with the hemp hurd and fungal spawn of *P*. *ostreatus* in mixture A and with the hemp hurd and fungal spawn of *P. pulmonarius* in mixture B in step 2 instead of step 3 to improve and accelerate the initial colonization, and in the same ratios. Although the substrate and water can sustain the initial colonizations in step b. even without the nutrient material, the nutrient material is to be added at some point during the colonization.

### Example 15

A two-step colonization method can be performed as follows:
1. Hemp hurd (the substrate) is supplied clean and is soaked in water until it reaches app. 65-70% moisture content.
2. In two separate inoculation bags, buckets or containers (preferably sterile), the hemp hurd is mixed with fungal spawn. Mixture A with fungal spawn of *G*. *lucidum* and mixture B with fungal spawn of *P. pulmonarius.* Each mixtures comprises 90 wt. % of the hemp hurd and 10 wt. % of the respective fungal spawn.
3. After 6-8 days of colonization (meaning at least 5 days), the two separately colonized substrates are combined in equal (50-50%) weight portions and mixed with 3 wt. % of the wheat flour as the nutrient material (3:100 ratio of the nutrient material and the total substrate). The new mixture is then placed into a moulding form, where it requires 5-7 additional days (meaning at least 3 days) to fully colonize.
4. Once colonization is complete, the moulding form is removed, and the structure is dried in an oven. First for 4 hours at 45 °C with the oven door slightly open to reduce moisture, followed by 3 hours of baking at 90 °C with the door closed.
5. The final structure is fully dried, ensuring no living mycelium remains.

As an alternative example to Examples 14 and 15, other possible and compatible combinations with any of the substrate specified above include: *P. ostreatus* and *P. populinus, P. ostreatus* and *P. eryngii*, *P. ostreatus* and *G. lucidum*, *P. ostreatus* and *T. versicolor*, *P. ostreatus* and *P*. *chrysosporium*, *P. ostreatus* and *L. edodes*, *P. ostreatus* and *H. ulmarius*, *P. pulmonarius* and *P*. *populinus*, *P. pulmonarius* and *P. eryngii*, *P. pulmonarius* and *T. versicolor*, *P. pulmonarius* and *P. chrysosporium*, *P. pulmonarius* and *L. edodes*, *P. pulmonarius* and *H. ulmarius*, *P. populinus* and *P. eryngii*, *P. populinus* and *G. lucidum, P. populinus* and *T. versicolor, P. populinus* and *P*. *chrysosporium, P. populinus* and *L. edodes*, *P. populinus* and *H. ulmarius*, *P. eryngii* and *G*. *lucidum*, *P. eryngii* and *T. versicolor*, *P. eryngii* and *P. chrysosporium*, *P. eryngii* and *L. edodes*, *P. eryngii* and *H. ulmarius*, *G. lucidum* and *T. versicolor*, *G. lucidum* and *P. chrysosporium, G. lucidum* and *L. edodes*, *G. lucidum* and *H. ulmarius*, *T. versicolor* and *P. chrysosporium*, *T. versicolor* and *L. edodes*, *T. versicolor* and *H. ulmarius*, *P. chrysosporium* and *L. edodes*, *P. chrysosporium* and *H. ulmarius*, *L. edodes* and *H. ulmarius.*

Within the context of Examples 14 and 15, mixture A can comprise fungal spawn of *P. ostreatus* and *G. lucidum* in a 1:99 to 99:1 (such as 1:9, 1:5, 1:4, 1:3, 1:2, 1:1, 2:1, 3:1, 4:1, 5:1 or 9:1) weight ratio.

Alternatively, the nutrient material can be mixed with the hemp hurd and fungal spawn of *G*. *lucidum* in mixture A and with the hemp hurd and fungal spawn of *P. pulmonarius* in mixture B in step 2 instead of step 3 to improve and accelerate the initial colonization, and in the same ratios. Although the substrate and water can sustain the initial colonizations in step b. even without the nutrient material, the nutrient material is to be added at some point during the colonization.

### Example 16

The biochar used in Examples 12 to 15 can be soaked with a solution of ammonium phosphate prepared from an aqueous mixture of 2 wt. % ammonium sulphate and 1 wt. % calcium dihydrogen phosphate hydrate (commonly known as triple superphosphate). 2 kg of biochar in a vessel can be submerged completely with the above aqueous ammonium phosphate solution (10 I of water, 200 g ammonium sulphate, 100 g calcium dihydrogen phosphate hydrate), soaked for 24-48 hours and then filtered off and air-dried. The nutrient-impregnated biochar is then used as a substrate in combination with the hemp hurd of Examples 12 to 15. It is inserted inside the colonization mixture in the moulding form such that it does not contact the surface of the structure.

### Example 17

A 3D printing method can be performed as follows:
1. Spent coffee grounds (the substrate) is supplied clean and is soaked in water until it reaches app. 50-75% moisture content.
2. In an inoculation bag, bucket or container (preferably sterile), the spent coffee grounds are mixed with wheat flour as the nutrient material, xanthan gum (or any suitable rheology modifier) and fungal spawn of *G*. *lucidum.* The mixture comprises 50-60 wt. % of the spent coffee grounds, 10-15 wt. % of flour, 0.5-2 wt. % of xanthan gum, 22-27 wt. % water and 3-7 wt. % of the fungal spawn.
3. The mixture is placed into a 3D printing device before colonization and the structure is printed therefrom.
4. The printed structure is allowed to colonize with mycelium for 10 days (meaning at least 8 days)
5. Once colonization is complete, the structure is air-dried at ambient temperature for at least 24 hours. The final structure is fully dried, ensuring no living mycelium remains.

For other possible combinations see Example 12 above.

### Example 18

The above-described mycelium-based structure can be used for habitat restoration in solar parks. The structure attaches directly to horizontal or vertical support beams of solar panels using a curved, modular design. The structure is secured without any further elements (such as flexible clamps or grooves on the structure), allowing it to fit various beam widths. Openings of different sizes are incorporated to provide nesting and shelter for small birds and insects, or even bats. The lightweight, aerodynamic structure minimizes wind resistance and integrates seamlessly beneath solar panels. Fire-retardant and moderately waterproof mycelium material ensures safety and durability within renewable energy infrastructure. Decomposition over one year enriches the soil with organic nutrients, supporting surrounding vegetation. The structure utilizes unused space within solar panel installations to enhance biodiversity without disrupting energy production or maintenance.

### Example 19

The above-described mycelium-based structure can be used for habitat restoration on fencing, such as surrounding solar parks in addition to the Example 18 above. This structure attaches to perimeter fencing surrounding solar parks, using its curved shape and lightweight design to lock securely in place. It functions as a nesting hub for small birds and an overwintering habitat and spaces for egg-laying, sheltering, or material storage for insects. As it is modular and scalable, it allows installation along long stretches of fencing to create ecological corridors. Durable for at least one season, it decomposes fully after use to prevent waste accumulation. The structure enhances connectivity between habitats by creating biodiversity corridors that link solar parks with surrounding ecosystems.

Examples of mounted or hung applications include fences (industrial, agricultural, residential), railings (on balconies, rooftops, in public transport, public institutions), walls (urban buildings, homes, warehouses, vertical gardens), light poles or streetlamps, park installations, community gardens, resting places, beams, crossbeams, pillars, support pillars, temporary security fences during construction, renewable energy structures (wind turbine surroundings), bridges or viaducts, and in the nature also on trees and bushes (clamped to branches, trunks, or natural cavities), cliff faces and rocky outcrops. Further applications can be for amateur or professional pet keeping or bird feeding, such as bird keeping for individuals or even in bird sanctuaries or ZOOs.

### Example 20

The above-described mycelium-based structure can be used for habitat restoration on the ground. A freestanding or partially buried structure placed on the ground within solar park boundaries is designed to support grassland rehabilitation and offer shelter to ground-dwelling species, such as reptiles, amphibians, and small mammals. The structure is embedded with native wildflower seed capsules to regenerate local vegetation and foster pollinator-friendly environments. It provides thermal insulation and moisture control, creating stable conditions for species during extreme weather or hibernation periods. Being fully biodegradable, the structure decomposes into the soil, leaving no waste while contributing to soil health. It promotes ecological restoration by creating biodiversity hotspots that attract wildlife and support ecosystem services like pest control and pollination for surrounding agriculture.

Examples of ground applications include grasslands and prairies, forest floors (temperate, tropical, boreal), wetlands (edges and transitional zones, arctic and sub-arctic wetlands for migratory birds), deserts (as microhabitats for small creatures), riverbanks and stream edges, agricultural fields (supporting pollinators and small mammals), parks and urban green spaces and restoration sites (post-mining, deforested areas). If used in extremely cold applications (arctic and sub-arctic), cold-resistant and moisture-absorbing mycelium variants can be used, ensuring slow decomposition in cold environments. If used in extremely warm applications (deserts), textured surface and internal microclimate design allow moisture retention in arid regions, capture humidity and provide shelter for heat-sensitive desert species.

### Example 21

The above-described mycelium-based structure can be used for habitat restoration underground. Being partially or fully buried it is designed for amphibians, reptiles, and small mammals. Entry points are positioned at ground level to allow easy access while providing protection from predators. Mycelium material provides natural insulation, maintaining stable internal temperatures for hibernating or sheltering species. Moisture-absorbing properties make it ideal for amphibians in wet or damp environments. Over time, the structure decomposes underground, enriching the soil with organic nutrients and fostering vegetation growth. If deployed near tree roots, agricultural fields and degraded soils, it supports microbial networks, stabilizes loose soil and can even prevent landslides. The structure offers a concealed, insulated shelter that supports species reliant on ground-level habitats while simultaneously improving soil conditions.

Examples of underground applications include subterranean habitats (for smaller burrowing animals, invertebrates such as beetles, ants and earthworms), soil improvement (enriching soil microbiota and fungi networks), root zone restoration when placed near tree roots to enhance soil aeration and microbial activity, underground insect colonies (ground-nesting bees, wasps or ants), erosion control (as buried forms can stabilize loose soils and prevent landslides in vulnerable areas), and in agricultural applications, such as embedded in degraded farmland to restore fertility and support underground biodiversity.

The structure can be fitted in a hole in the ground and laid on the rounded belly portion and the proximal straight section, with the free space surrounded by the hook portion being accessible from above the ground, creating a sort of a burrow. In essence, the structure can be partially or completely buried underground in any way.

### Example 22

The above-described mycelium-based structure can be used for habitat restoration underwater, such as in freshwater bodies (lakes, rivers, ponds), coastal marine environments, coral reefs and artificial reefs (such as temporary substrate for coral larvae and marine life colonization), brackish water zones (estuaries, lagoons), seagrass meadows, mangrove root systems, aquaculture farms (as habitat enhancements), fish nurseries or underwater rock formations.

The porous texture of the structure encourages biofouling, where algae, barnacles, mussels and other marine organisms attach to surfaces. Biofouling provides additional food and habitat resources for filter feeders and grazing species, enhancing biodiversity. Surface textures are optimized for biofouling, ensuring natural or artificial colonization by mussels, barnacles and corals (such as in aquacultural applications). Optimization can also include lack of further surface processing, leaving the structure naturally rough. Marine-adapted designs can resist wave motion while supporting species attachment (such as by anchoring).

The structure can be anchored underwater by means of the hook portion, wherein the rounded belly portion can float underwater or above the water level above the hook portion (the structure would be installed "upside down"). The structure can be laid on the bedrock underwater on its side and it can be weighed down with stones.

### Example 23

The above-described mycelium-based structure can be used for habitat restoration by floating in the water, such as in freshwater (lakes, rivers, reservoirs), saltwater (seas, oceans), wetlands (marshes, swamps, peatlands), offshore wind farms, floating islands (man-made or natural clusters), calm bays and inlets, fishery zones (for attracting fish or birds), docks, piers, marinas, fish ladders.

Buoyant yet biodegradable, the structure initially floats, providing temporary habitat and resting spots for aquatic birds, amphibians, and insects. As it absorbs water, which strongly depends on the density of the surface layer of the structure, the structure transitions into a semi-submerged or fully submerged phase, supporting fish, invertebrates, and aquatic vegetation. As the structure degrades, it releases organic nutrients (carbon, nitrogen, phosphorus) that promote primary productivity and microbial activity. Buoyancy-adjusted biodegradable material composition ensures gradual sinking or floating stability over time. Structural designs are tailored to provide stability in both freshwater and marine environments.

The structure can be attached to floating solar panels, wind farm pylons or artificial reefs, providing dual ecological and engineering benefits. It acts as both a stabilizing structure and a biodiversity booster, fostering habitats around renewable energy projects. Unique surface morphology is optimized for colonization by marine species such as sponges, corals and small crustaceans, even in aquacultural applications. Wave-resistant stabilization techniques (such as anchoring) ensure the structure remains secure in dynamic environments.

### Example 24

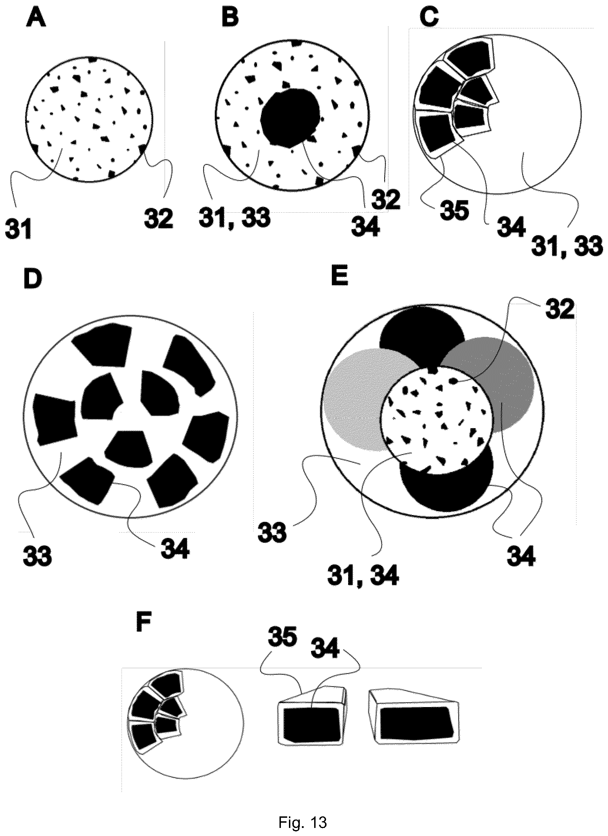

Fig. 13a shows a spherical structure comprising a matrix 31 comprising mycelium, the substrate and scattered bits 32 of the porous carrier (such as biochar or activated carbon) impregnated with at least one nutrient. The scattered bits 32 come into contact with the outer surface of the structure. The scattered bits 32 can be in the form of a fine dust or small fragments.

Fig. 13b shows the structure of Fig. 13a, further comprising an inner core 34 comprising the porous carrier (such as biochar or lignite-derived humic acid) impregnated with at least one nutrient. The matrix 31 forms the outer shell 33. The inner core 34 might be free of mycelium or it might comprise a mycelium-cross-linked structure. The inner core 34 does not come into contact with the outer surface of the structure.

Fig. 13c shows a spherical structure comprising a matrix 31 comprising mycelium and the substrate, forming the outer shell 33, and a plurality of capsules 35 comprising an inner core 34 comprising the porous carrier (such as biochar or zeolite) impregnated with at least one nutrient, further surrounded by mycelium and the substrate. There might or might not be a distinctive boundary between the outer edge of the capsule (i. e. the mycelium and the substrate surrounding the inner core 34) and the matrix 31. The capsules 35 might be free of mycelium or they might comprise a mycelium-cross-linked structure. The capsules 35 do not come into contact with the outer surface of the structure. Fig. 13f shows the capsule 35 of the structure of Fig. 13c in detail, comprising the inner core 34.

Fig. 13d shows a spherical structure comprising an outer shell 33 comprising mycelium and the substrate, and a plurality of inner cores 34 comprising the porous carrier (such as biochar or diatomaceous earth) impregnated with at least one nutrient. The inner cores 34 might be free of mycelium or they might comprise a mycelium-cross-linked structure. The inner cores 34 do not come into contact with the outer surface of the structure.

Fig. 13e shows a spherical structure comprising an outer shell 33 comprising mycelium and the substrate, and a plurality of inner cores 34 comprising the porous carrier (such as biochar or bentonite or montmorillonite) impregnated with at least one nutrient. At least one of the inner cores 34 can comprise a matrix 31 comprising mycelium, the substrate and scattered bits 32 of the porous carrier (such as biochar or bentonite or montmorillonite) impregnated with at least one nutrient. At least one of the inner cores 34 can itself comprise a sub-shell comprising mycelium and the substrate, surrounding the porous carrier (e. g. a ball within a ball, a pomegranate-like structure). At least one of the inner cores 34 can be free of mycelium. The inner cores 34 do not come into contact with the outer surface of the structure.

The methods described above in Examples 12 to 17 and uses described above in Examples 20 to 23 are also applicable for this Example. In all sub-examples of Example 24 above, the porous carrier can be on its own, without being impregnated with any nutrient.

### Industrial applicability

The mycelium-based structure according to the present invention can be used for habitat restoration, such as a birdhouse, an insect hotel, a burrow and the like. The mycelium-based structure according to the present invention can further be used for a small-scale precise nutrient targeting or a large-scale ecological restoration project aimed at combating desertification or soil degradation, such as in areas affected with deforestation, overgrazing or mining.

### List of reference signs

- 1: rounded belly portion
- 2: hook portion
- 3: proximal straight section
- 4: curved section
- 5: distal straight section
- 6: lock
- 7: support
- 8: hemp fibre
- 9: first through-hole
- 10: cavity
- 11: tapered bottom edge
- 12: vertical cut-in gap
- 13: electronics
- 14: base
- 15: middle wedge-like protrusion
- 16: side wedge-like protrusion
- 17: gap
- 18: second through-hole
- 19: wedge base
- 20: wedge tip
- 21: vertical fencing
- 22: moulding form for the structure
- 23: moulding form for the lock or support
- 31: matrix
- 32: scattered bits
- 33: outer shell
- 34: inner core
- 35: capsule

## Claims

1. A mycelium-based structure for biodiversity enhancement and habitat formation and restoration, comprising: mycelium of at least one fungus; and a substrate of discrete particles bonded together by the mycelium, wherein the substrate comprises plant biomass, **characterised in that** the structure comprises: a rounded belly portion (1); and a hook portion (2), wherein the hook portion (2) comprises: a proximal straight section (3) attached to the rounded belly portion (1); a curved section (4) attached to the proximal straight section (3); and a distal straight section (5) attached to the curved section (4), wherein the proximal and distal straight sections (3, 5) are oriented in parallel to each other and the curved section (4) is an arc.

2. The mycelium-based structure according to claim 1, **characterised in that** the fungus is any of *Pleurotus ostreatus*, *Pleurotus pulmonarius*, *Pleurotus populinus*, *Pleurotus eryngii*, *Ganoderma lucidum, Trametes versicolor, Phanerochaete chrysosporium, Lentinula edodes, Hypsizygus ulmarius* or a combination thereof.

3. The mycelium-based structure according to claim 1 or 2, **characterised in that** it comprises mycelium of *Pleurotus ostreatus* and *Pleurotus pulmonarius* or **in that** it comprises mycelium of *Ganoderma lucidum* and *Pleurotus pulmonarius.*

4. The mycelium-based structure according to any of the previous claims, **characterised in that** the proximal straight section (3) has a tapered shape narrowing towards the curved section (4) and widening towards the rounded belly portion (1), wherein the distal straight section (5) has a tapered shape widening towards the curved section (4) and narrowing towards a distal end of the distal straight section (5).

5. The mycelium-based structure according to any of the previous claims, **characterised in that** the substrate is selected from a group consisting of hemp, hemp hurd, straw, hay, wood sawdust, wood chips, bagasse, corn husks, corn cobs, coconut coir, spent coffee grounds or a combination thereof.

6. The mycelium-based structure according to any of the previous claims, **characterised in that** it comprises hemp fibres (8) arranged in the hook portion (2) and oriented at least partially along the hook portion (2).

7. The mycelium-based structure according to any of the previous claims, **characterised in that** it comprises at least one first through-hole (9) and/or cavity (10) in the rounded belly portion (1).

8. The mycelium-based structure according to any of the previous claims, **characterised in that** the distal straight section (5) comprises a vertical cut-in gap (12) for locking the structure onto a vertical bar.

9. The mycelium-based structure according to any of the previous claims, **characterised in that** it comprises a porous carrier and/or **in that** it comprises plant seeds embedded in the structure and/or **in that** it comprises an outer protective coating made from cutin and/or beeswax.

10. The mycelium-based structure according to any of the previous claims, **characterised in that** it comprises any of the following wireless electronics (13) for collecting data on habitat restoration: a camera, a microphone, an acoustic sensor, a motion sensor, a temperature sensor, a humidity sensor and/or a light intensity sensor.

11. An assembly of a mycelium-based lock (6) and the mycelium-based structure according to any of claims 1 to 10, **characterised in that** the mycelium-based lock (6) comprises a base (14) and at least two wedge-like protrusions (15, 16), which are spaced apart and oriented in parallel to one another to define at least one gap (17) between the protrusions (15, 16), wherein if the mycelium-based lock (6) comprises at least three wedge-like protrusions (15, 16), which are spaced apart to define two side protrusions (16) and at least one middle protrusion (15) and which are oriented in parallel to one another to define a gap (17) between each two neighbouring protrusions (15, 16), the width of the two gaps (17) and the middle protrusion (15) surrounded by said two gaps (17) is equal to or larger than the width of the curved section (4) of the mycelium-based structure, wherein the curved section (4) of the mycelium-based structure comprises a second through-hole (18) for fitting the protrusion (15, 16) therein.

12. An assembly of a mycelium-based support (7) and the mycelium-based structure according to any of claims 1 to 10, **characterised in that** the mycelium-based support (7) has a wedge shape for being placed between the rounded belly portion (1) of the mycelium-based structure and a vertical fence or wall.

13. A method for production of the mycelium-based structure according to any of claims 1 to 10 or the assembly according to claim 11 or 12, **characterised in that** it comprises the following steps:
a. soaking the substrate in water to 60 to 75 % moisture content;
b. mixing 85 to 98 wt. % of substrate with 1 to 15 wt. % of fungal spawn of at least one fungus as a mycelium precursor and with 1-3 wt. % of a nutrient material digestible by the at least one fungus;
c. placing the mixture in a moulding form and allowing the mycelium to colonise the substrate from the mycelium precursor by digesting the nutrient material for a total colonisation time of at least 8 days;
d. drying the mycelium at 40 to 50 °C for 3 to 5 hours, then at 85 to 95 °C for 2 to 4 hours to obtain the mycelium-based structure.

14. The method according to claim 13, **characterised in that**
a. in step b., the substrate is mixed with the fungal spawn as a mycelium precursor and optionally with the nutrient material in a container to form a mixture, allowing the mycelium to colonise the substrate from the mycelium precursor at least for 5 days; and
b. in step c., the mixture is transferred from the container in a moulding form, optionally mixed with the nutrient material and the mycelium is allowed to further colonise at least for 3 more days, wherein the nutrient material is added in step b. and/or in step c.

15. The method according to claim 13 or 14, **characterised in that**
a. in step b.
i. a first portion of the substrate is mixed with fungal spawn of *Pleurotus ostreatus* and/or *Ganoderma lucidum* as a first mycelium precursor and optionally with the nutrient material to form a mixture A in a first container, allowing the mycelium to colonise the substrate from the first mycelium precursor at least for 5 days; and
ii. a second portion of the substrate is mixed with fungal spawn of *Pleurotus pulmonarius* as a mycelium precursor and optionally with the nutrient material to form a mixture B in a second container, allowing the mycelium to colonise the substrate from the second mycelium precursor at least for 5 days;
b. in step c., the mixtures A and B are mixed together in a weight ratio of 2:3 to 3:2, placed in a moulding form, optionally mixed with the nutrient material and the mycelium is allowed to further colonise both portions of the substrate from the first and second mycelium precursors at least for 3 more days, wherein the nutrient material is added in step b. and/or in step c.
